# FASCICULE DE BREVET EUROPEEN

(11) **EP 4 178 811 B1**
(45) Date de publication et mention de la délivrance du brevet: **06.11.2024**
(21) Numéro de dépôt: 21723323.8
(22) Date de dépôt: 01.04.2021
(51) Int. Cl.: B60C 9/07, B60C 9/08, B60C 9/20, B60C 9/22, B29D 30/22, B29D 30/24, B29D 30/30

(54) **PROCEDE DE FABRICATION SIMPLIFIE D'UN PNEUMATIQUE A UNE SEULE COUCHE DE TRAVAIL**
VERFAHREN ZUR VEREINFACHTEN HERSTELLUNG EINES REIFENS MIT EINER EINZIGEN ARBEITSSCHICHT
METHOD FOR SIMPLIFIED MANUFACTURE OF A TYRE WITH A SINGLE WORKING LAYER

(30) Priorité: 08.07.2020 FR 2007226
(43) Date de publication de la demande: 17.05.2023
(73) Titulaire: COMPAGNIE GENERALE DES ETABLISSEMENTS MICHELIN, 63000 Clermont-Ferrand (FR)
(72) Inventeur: ROTY, Gael, 63040 CLERMONT-FERRAND Cedex 9 (FR); FERIGO, Hervé, 63040 CLERMONT-FERRAND Cedex 9 (FR)
(74) Mandataire: M.F.P. Michelin
(86) Numéro de dépôt international: PCT/FR2021/050581
(87) Numéro de publication internationale: WO 2022/008807

(56) Documents cités:
- EP-A1- 1 623 819
- WO-A1-2016/166057
- WO-A1-2019/122621
- WO-A1-2021/074510
- WO-A1-2021/074511
- WO-A1-2021/074533
- DE-A1- 1 480 929
- FR-A- 1 508 652
- FR-A- 1 570 136
- FR-A1- 2 178 000

## Description

La présente invention est relative à un procédé de fabrication d'un pneumatique ainsi qu'à un pneumatique fabriqué par un tel procédé.

On connait de l'état de la technique, notamment de EP3489035 des pneumatiques comprenant un sommet, deux flancs, deux bourrelets, chaque flanc reliant respectivement chaque bourrelet au sommet. Chaque bourrelet comprend au moins un élément de renfort circonférentiel, généralement sous la forme d'une tringle.

Le pneumatique comprend également une armature de carcasse ancrée dans chaque bourrelet et s'étendant dans chaque flanc et dans le sommet. L'armature de carcasse comprend une unique couche de carcasse enroulée autour de chaque élément de renfort circonférentiel.

Le sommet comprend une bande de roulement destinée à venir en contact avec un sol lors du roulage du pneumatique ainsi qu'une armature de sommet agencée radialement entre la bande de roulement et l'armature de carcasse. L'armature de sommet comprend une armature de travail comprenant une unique couche de travail. L'armature de sommet comprend également une armature de frettage agencée radialement à l'extérieur de l'armature de travail.

Comme décrit ci-dessus, la particularité des pneumatiques décrits dans EP3489035 est de supprimer une couche de travail par rapport à un pneumatique classique dans lequel l'armature de travail comprend deux couches de travail. Dans EP3489035, l'avantage de supprimer une des couches de travail est de réduire la quantité de matériaux utilisés dans le pneumatique et donc sa masse tout en améliorant sa rigidité circonférentielle, ce qui se traduit en contrepartie par une baisse de la rigidité de cisaillement, baisse qui est néanmoins acceptable au vu des gains de matériaux.

Le procédé de fabrication des pneumatiques de EP3489035 comprend, comme cela est connu dans l'état de la technique, notamment de FR2797213 et de FR1413102, une étape dans laquelle on forme par enroulement d'une nappe de carcasse autour d'un support, un ensemble de carcasse destiné à former la couche de carcasse. L'ensemble de carcasse comprend des éléments de renfort filaires de carcasse s'étendant selon une direction principale formant, avec la direction circonférentielle du support, un angle initial dépendant de l'angle que l'on souhaite obtenir dans le pneumatique à l'issu du procédé de fabrication.

Puis, on forme par enroulement d'une nappe de travail radialement à l'extérieur de l'ensemble de carcasse, un ensemble de travail destiné à former la couche de travail. L'ensemble de travail comprend des éléments de renfort filaires de travail s'étendant selon une direction principale formant, avec la direction circonférentielle du support, un angle initial là encore dépendant de l'angle que l'on souhaite obtenir dans le pneumatique à l'issu du procédé de fabrication. L'ensemble de carcasse et l'ensemble de travail forment alors un assemblage de forme sensiblement cylindrique.

Puis, on déforme l'assemblage de forme sensiblement cylindrique de façon à obtenir un assemblage de forme sensiblement torique de sorte que :
- la direction principale de chaque élément de renfort filaire de carcasse forme, avec la direction circonférentielle du support, un angle final égal à 70° pour la variante S1 et égal à 43° pour la variante S2 de EP3489035, dans une portion axialement centrale de l'ensemble de carcasse s'étendant axialement à l'aplomb radial de l'ensemble de travail, et
- la direction principale de chaque élément de renfort filaire de travail forme, avec la direction circonférentielle du support, un angle final égal à -40° pour la variante S1 et égal à -24° pour la variante S2 de EP3489035.

Puis, on réticule une ébauche crue de pneumatique obtenue à partir de l'assemblage de forme sensiblement torique de façon à obtenir le pneumatique. Dans le pneumatique, la direction principale de chaque élément de renfort filaire de carcasse forme, avec la direction circonférentielle du pneumatique, un angle égal à l'angle final obtenu à l'issue de l'étape de déformation. La direction principale de chaque élément de renfort filaire de travail forme, avec la direction circonférentielle du pneumatique, un angle égal à l'angle final obtenu à l'issue de l'étape de déformation.

Préalablement à l'étape de formation de l'ensemble de carcasse par enroulement de la nappe de carcasse, on fabrique la nappe de carcasse en agençant parallèlement les uns aux autres les éléments de renfort filaires de carcasse et en les noyant, par exemple par calandrage, dans une composition non réticulée comprenant au moins un élastomère, la composition étant destinée à former une matrice élastomérique une fois réticulée. On obtient une nappe dite droite, dans laquelle les éléments de renfort filaires de carcasse sont parallèles les uns aux autres et sont parallèles à la direction principale de la nappe de carcasse. Puis, on découpe des portions de la nappe de carcasse selon un angle de découpe et on aboute ces portions les unes aux autres de façon à obtenir une nappe dite à angle, dans laquelle la direction principale selon laquelle s'étendent les éléments de renfort filaires de carcasse parallèlement les uns aux autres forme, avec la direction principale de la nappe de carcasse, un angle égal à l'angle de découpe, cet angle étant égal à l'angle initial précédemment décrit. La nappe de travail est fabriquée de façon analogue.

Afin d'obtenir le même angle final dans des pneumatiques de dimensions différentes, il est nécessaire d'utiliser des angles initiaux différents, afin de tenir compte des taux de conformation qui varient entre les différentes dimensions, ce qui nécessite d'avoir à fabriquer théoriquement autant de nappes de carcasse et de nappes de travail qu'il existe de dimensions de pneumatiques. Or, la gestion en usine d'un aussi grand nombre de nappes est complexe et coûteuse.

On connait de l'état de la technique les documents FR1570136, FR1508652, WO2019122621, WO2016166057 et EP1623819.

L'invention a pour but de permettre une fabrication simplifiée d'un pneumatique comprenant une unique couche de travail à partir d'un nombre limité de nappes de carcasse et de travail tout en conservant les propriétés mécaniques principales du pneumatique que sont sa rigidité de cisaillement et sa rigidité circonférentielle.

### PROCEDE SELON L'INVENTION

A cet effet, l'invention a pour objet un procédé de fabrication d'un pneumatique comprenant un sommet, deux flancs, deux bourrelets, chaque flanc reliant respectivement chaque bourrelet au sommet, le pneumatique comprenant une armature de carcasse ancrée dans chaque bourrelet et s'étendant dans chaque flanc et radialement intérieurement au sommet, l'armature de carcasse comprenant au moins une couche de carcasse, le sommet comprenant :
- une bande de roulement destinée à venir en contact avec un sol lors du roulage du pneumatique,
- une armature de sommet agencée radialement entre la bande de roulement et l'armature de carcasse, l'armature de sommet comprenant une armature de travail comprenant une unique couche de travail, la couche de travail étant délimitée axialement par deux bords axiaux de la couche de travail et comprend des éléments de renfort filaires de travail s'étendant axialement d'un bord axial à l'autre bord axial de la couche de travail les uns sensiblement parallèlement aux autres selon une direction principale de chaque élément de renfort filaire de travail formant, avec la direction circonférentielle du pneumatique, un angle AT,
procédé dans lequel :
- on agence, autour d'un support présentant une forme sensiblement cylindrique autour d'un axe principal, un ensemble de carcasse destiné à former la au moins une couche de carcasse, l'ensemble de carcasse étant délimité axialement par deux bords axiaux de l'ensemble de carcasse et comprenant des éléments de renfort filaires de carcasse s'étendant sensiblement parallèlement les uns aux autres axialement d'un bord axial à l'autre bord axial de l'ensemble de carcasse, chaque élément de renfort filaire de carcasse s'étendant, dans l'ensemble de carcasse, selon une direction principale de chaque élément de renfort filaire de carcasse formant, avec la direction circonférentielle du support, un angle initial A3,
- on agence, radialement à l'extérieur de l'ensemble de carcasse, un ensemble de travail destiné à former la couche de travail, l'ensemble de carcasse et l'ensemble de travail formant un assemblage de forme sensiblement cylindrique autour de l'axe principal du support,
- on déforme l'assemblage de forme sensiblement cylindrique autour de l'axe principal du support de façon à obtenir un assemblage de forme sensiblement torique autour de l'axe principal du support,
- on réticule une ébauche crue de pneumatique obtenue à partir de l'assemblage de forme sensiblement torique de façon à obtenir le pneumatique,
procédé dans lequel l'angle A3 va, en valeur absolue, de 80° à 90° et l'angle AT va, en valeur absolue, de 30° à 37°.

En utilisant un angle initial A3 allant, en valeur absolue, de 80° à 90°, il est suffisant d'avoir une ou plusieurs nappes de carcasse permettant d'agencer l'ensemble de carcasse, chaque nappe ayant un seul angle de découpe, ici compris entre 80° et 90°. On peut ainsi éviter la nécessité de fabriquer autant de nappes de carcasse qu'il existe de dimensions de pneumatiques. L'intervalle d'angles allant de 80° à 90° permet de prendre en compte la variabilité industrielle des procédés de fabrication, notamment lors de l'étape de calandrage, qui conduit à obtenir des nappes droites dans lesquelles l'angle initial A3 peut osciller, dans la limite de 10°, autour de la valeur théorique de 90°. De façon implicite, l'angle initial A3 est constant lorsqu'on se déplace axialement d'un bord axial à l'autre bord axial de l'ensemble de carcasse.

Dans le pneumatique, l'angle de la direction principale de chaque élément de renfort filaire de carcasse dans la portion axialement centrale de la couche de carcasse est donc fonction du taux de conformation et de l'angle initial de la direction principale de chaque élément de renfort filaire de travail. L'obtention des propriétés mécaniques principales du pneumatique que sont sa rigidité de cisaillement et sa rigidité circonférentielle peut alors se faire en faisant uniquement varier, en fonction du taux de conformation, l'angle initial de la direction principale de chaque élément de renfort filaire de travail. Le procédé selon l'invention permet donc de n'avoir à gérer que des nappes de travail différentes.

Comme le montre les résultats des tests ci-dessous, une rigidité de cisaillement et une rigidité circonférentielle satisfaisantes peuvent être obtenues dans l'intervalle d'angle AT allant de 27° à 40°. Même si une légère diminution de ces rigidités est observée, notamment pour la rigidité circonférentielle, cette diminution est largement compensée par la simplification du procédé et la réduction du nombre de nappes de carcasses à gérer.

Les inventeurs à l'origine de l'invention ont noté qu'en utilisant un angle AT relativement grand, c'est-à-dire supérieur ou égal à 30°, on améliorait la rigidité de cisaillement du sommet du pneumatique par rapport à des angles plus petits.

Néanmoins, l'utilisation d'un angle AT trop grand, c'est-à-dire supérieur à 37°, entraine une baisse de cette rigidité circonférentielle ainsi qu'une augmentation du bruit du pneumatique. Il est donc préférable de ne pas utiliser un angle AT trop grand. Dans le cadre de l'invention, les inventeurs ont compris que l'utilisation d'un angle AT trop grand réduit la contribution de la couche de travail à la rigidité circonférentielle par une projection moindre de l'effort développé par la couche de travail dans la direction circonférentielle. Par ailleurs, toujours dans le cadre de l'invention, les inventeurs ont compris qu'un angle AT trop grand contribuait à une augmentation du bruit en raison d'une réponse vibratoire accrue par rapport à un angle AT plus modéré.

Conformément à l'invention, l'armature de travail comprend une unique couche de travail. La présence d'une unique couche de travail permet notamment d'alléger le pneumatique, donc de réduire l'énergie dissipée par hystérèse du sommet et donc de réduire la résistance au roulement du pneumatique. Ainsi, l'armature de travail est, à l'exception de la couche de travail, dépourvue de toute couche renforcée par des éléments de renfort filaires. Les éléments de renfort filaires de telles couches renforcées exclues de l'armature de travail du pneumatique comprennent les éléments de renfort filaires métalliques et les éléments de renfort filaires textiles. De façon très préférentielle, l'armature de travail est constituée par l'unique couche de travail.

Un ensemble de carcasse peut être destiné à former une seule couche de carcasse ou bien être destiné à former deux couches de carcasse, par exemple en enroulant cet ensemble de carcasse sur deux tours. Ainsi, dans un mode de réalisation dans lequel le pneumatique comprend deux couches de carcasse, on pourra agencer un seul ensemble de carcasse, par exemple en l'enroulant sur deux tours ou bien agencer un premier ensemble de carcasse radialement interne et agencer un deuxième ensemble de carcasse radialement externe agencé autour du premier ensemble de carcasse radialement interne, chaque premier et deuxième ensemble de carcasse étant destiné à former chaque couche de carcasse.

Dans le cadre de l'invention, l'ensemble de travail est destiné à former l'unique couche de travail.

De façon préférée permettant d'utiliser un procédé relativement simple, on forme l'ensemble de carcasse par enroulement d'une nappe de carcasse ou de plusieurs nappes de carcasse autour du support et on forme l'ensemble de travail par enroulement d'une nappe de travail ou de plusieurs nappes de travail radialement à l'extérieur de l'ensemble de carcasse.

Dans un procédé simplifié dans lequel on n'a à manipuler qu'une nappe de carcasse pour former chaque ensemble de carcasse et dans lequel on éviterait des jonctions circonférentielles entre plusieurs nappes de carcasse de largeurs axiales inférieures à la largeur axiale de chaque ensemble de carcasse destiné à être formé, chaque ensemble de carcasse est constitué d'une nappe de carcasse qui est destinée à former chaque couche de carcasse. En d'autres termes, chaque nappe de carcasse est axialement continue.

Dans le cas où on forme chaque ensemble de carcasse avec plusieurs nappes de carcasse, on utilisera préférentiellement plusieurs nappes de carcasse dans lesquelles les directions principales des éléments de renfort filaires de carcasse sont toutes parallèles les unes aux autres.

De façon analogue, dans un procédé simplifié dans lequel on n'a à manipuler qu'une nappe de travail pour former l'ensemble de travail et dans lequel on éviterait des jonctions circonférentielles entre plusieurs nappes de travail de largeurs axiales inférieures à la largeur axiale de l'ensemble de travail destiné à être formé, l'ensemble de travail est obtenu à partir d'une nappe de travail qui est destinée à former l'unique couche de travail. En d'autres termes, la nappe de travail est axialement continue.

Dans le cas où on forme l'ensemble de travail avec plusieurs nappes de travail, on utilisera préférentiellement plusieurs nappes de travail dans lesquelles les directions principales des éléments de renfort filaires de travail sont toutes parallèles les unes aux autres. Bien entendu, on pourra envisager des directions principales des éléments de renfort filaires de travail non parallèles les unes aux autres d'une nappe travail à l'autre.

Les pneumatiques de l'invention sont destinés préférentiellement à des véhicules de tourisme tels que définis au sens de la norme de la European Tyre and Rim Technical Organisation ou « ETRTO », 2019. Un tel pneumatique présente une section dans un plan de coupe méridien caractérisée par une hauteur de section H et une largeur de section nominale ou grosseur boudin S au sens de la norme de la European Tyre and Rim Technical Organisation ou « ETRTO », 2019 telles que le rapport H/S, exprimé en pourcentage, est au plus égal à 90, de préférence au plus égal à 80 et plus préférentiellement au plus égal à 70 et est au moins égal à 30, de préférence au moins égal à 40, et la largeur de section S est au moins égale à 115 mm, de préférence au moins égale à 155 mm et plus préférentiellement au moins égale à 175 mm et au plus égal à 385 mm, de préférence au plus égal à 315 mm, plus préférentiellement au plus égal à 285 mm et encore plus préférentiellement au plus égal à 255 mm. En outre le diamètre au crochet D, définissant le diamètre de la jante de montage du pneumatique, est au moins égal à 12 pouces, de préférence au moins égal à 16 pouces et au plus égal à 24 pouces, de préférence au plus égal à 20 pouces.

Par direction axiale, on entend la direction sensiblement parallèle à l'axe principal du pneumatique ou du support, c'est-à-dire l'axe de rotation du pneumatique ou du support.

Par direction circonférentielle, on entend la direction qui est sensiblement perpendiculaire à la fois à la direction axiale et à un rayon du pneumatique ou du support (en d'autres termes, tangente à un cercle dont le centre est sur l'axe de rotation du pneumatique ou du support).

Par direction radiale, on entend la direction selon un rayon du pneumatique ou du support, c'est-à-dire une direction quelconque coupant l'axe de rotation du pneumatique ou du support et sensiblement perpendiculaire à cet axe.

Par plan médian du pneumatique (noté M), on entend le plan perpendiculaire à l'axe de rotation du pneumatique qui est situé à mi-distance axiale des deux bourrelets et passe par le milieu axial de l'armature de sommet.

Par plan médian de l'assemblage (noté m), on entend le plan perpendiculaire à l'axe principal du support qui est situé à mi-distance axiale, entre chaque bord axial de l'assemblage.

Par plan circonférentiel équatorial du pneumatique (noté E), on entend la surface cylindrique théorique passant par l'équateur du pneumatique, perpendiculaire au plan médian et à la direction radiale. L'équateur du pneumatique est, dans un plan de coupe méridienne (plan perpendiculaire à la direction circonférentielle et parallèle aux directions radiale et axiales) l'axe parallèle à l'axe de rotation du pneumatique et située à équidistance entre le point radialement le plus externe de la bande de roulement destiné à être au contact avec le sol et le point radialement le plus interne du pneumatique destiné à être en contact avec un support, par exemple une jante, la distance entre ces deux points étant égale à H.

Par plan circonférentiel équatorial de l'assemblage (noté e), on entend la surface cylindrique théorique passant par l'équateur de l'assemblage, perpendiculaire au plan médian et à la direction radiale. L'équateur de l'assemblage est, dans un plan de coupe méridienne (plan perpendiculaire à la direction circonférentielle et parallèle aux directions radiale et axiales) l'axe parallèle à l'axe principal du support et situé à équidistance entre le point radialement le plus externe de l'assemblage et le point radialement le plus interne de l'assemblage, la distance entre ces deux points étant égale à h.

Par plan méridien, on entend un plan parallèle à et contenant l'axe de rotation du pneumatique et perpendiculaire à la direction circonférentielle.

Par bourrelet, on entend la portion du pneumatique destiné à permettre l'accrochage du pneumatique sur un support de montage, par exemple une roue comprenant une jante. Ainsi, chaque bourrelet est notamment destiné à être au contact d'un crochet de la jante permettant son accrochage.

Par direction principale selon laquelle un élément de renfort filaire s'étend, on comprend la direction selon laquelle l'élément de renfort filaire s'étend selon sa plus grande longueur. La direction principale selon laquelle un élément de renfort filaire s'étend peut être rectiligne ou courbe, l'élément de renfort pouvant décrire le long de sa direction principale une trajectoire rectiligne ou bien ondulée.

Par portion de l'assemblage, d'une couche ou du pneumatique comprise axialement entre les bords axiaux d'un ensemble ou d'une couche ou d'une armature, on comprend une portion de l'assemblage, de la couche ou du pneumatique s'étendant axialement et comprise entre les plans radiaux passant par les bords axiaux de l'ensemble ou de la couche ou de l'armature.

Par portion d'un ensemble destinée à s'étendre axialement, portion d'un ensemble s'étendant axialement ou portion d'une couche s'étendant axialement à l'aplomb radial d'un ensemble de référence ou d'une couche de référence, on comprend une portion dudit ensemble ou de ladite couche comprise entre les projections radiales des bords axiaux de l'ensemble de référence ou de la couche de référence sur ledit ensemble ou ladite couche.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Dans le pneumatique, l'angle considéré est l'angle, en valeur absolue, le plus petit des deux angles définis entre la droite de référence, ici la direction circonférentielle du pneumatique, et la direction principale selon laquelle l'élément de renfort filaire considéré s'étend.

Dans le pneumatique et lors du procédé, par orientation d'un angle, on entend le sens, horaire ou anti-horaire, dans lequel il faut tourner depuis la droite de référence, ici la direction circonférentielle du support ou du pneumatique, définissant l'angle pour atteindre la direction principale selon laquelle l'élément de renfort filaire considéré s'étend.

Lors du procédé, les angles considérés formés par les directions principales selon lesquelles s'étendent les éléments de renfort filaires de travail et de carcasse sont par convention des angles d'orientations opposées et l'angle formé par la direction principale selon laquelle s'étend chaque élément de renfort filaire de travail est, en valeur absolue, le plus petit des deux angles définis entre la droite de référence, ici la direction circonférentielle du support ou du pneumatique et la direction principale selon laquelle l'élément de renfort filaire de travail s'étend. Ainsi, l'angle formé par la direction principale selon laquelle s'étend chaque élément de renfort filaire de travail définit une orientation qui est opposée à celle formée par l'angle de la direction principale selon laquelle s'étend chaque élément de renfort filaire de carcasse.

Dans des modes de réalisation dans lesquels il existe une faible variabilité industrielle lors de la fabrication de la ou des nappes de carcasses, l'angle A3 va, en valeur absolue, de 85° à 90° et de préférence est sensiblement égal à 90°.

De préférence, l'angle AT va, en valeur absolue, de 30° à 35°.

Dans des modes de réalisation permettant d'ancrer facilement la ou les couches de carcasse dans chaque bourrelet, chaque bourrelet comprenant un élément de renfort circonférentiel, postérieurement à l'étape d'agencement de l'ensemble de carcasse et préalablement à l'étape d'agencement de l'ensemble de travail:
- on agence les deux éléments de renfort circonférentiels autour de l'ensemble de carcasse,
- on retourne axialement vers l'intérieur chaque bord axial de l'ensemble de carcasse de façon à ce que l'ensemble de carcasse soit enroulé axialement autour de chaque élément de renfort circonférentiel.

Dans ces modes de réalisation dans lesquels la ou les couches de carcasse sont enroulées autour des éléments de renfort circonférentiels, la ou chaque couche de carcasse étant délimitée axialement par deux bords axiaux de la couche de carcasse et comprenant les éléments de renfort filaires de carcasse s'étendant axialement d'un bord axial à l'autre bord axial de la couche de carcasse, la direction principale de chaque élément de renfort filaire de carcasse forme, avec la direction circonférentielle du pneumatique:
- un angle ACS, en valeur absolue, strictement inférieur à 80°, dans une portion axialement centrale de la couche de carcasse s'étendant axialement à l'aplomb radial de la couche de travail,
- un angle ACF allant, en valeur absolue, de 80° à 90°, de préférence de 85° à 90° et plus préférentiellement est sensiblement égal à 90°, dans chaque portion axialement latérale de la couche de carcasse s'étendant axialement entre la portion axialement centrale et chaque bord axial de la couche de carcasse, chaque portion axialement latérale étant enroulée autour de chaque élément de renfort circonférentiel.

Dans le procédé décrit ci-dessus, les angles initiaux formés avec la direction circonférentielle du support par les directions principales des éléments de renfort filaires de carcasse et de travail varient lors de l'étape de déformation pour atteindre leurs angles finaux et les angles dans le pneumatique, à l'exception de chaque portion axialement latérale enroulée autour des éléments de renfort circonférentiels dans lesquelles la direction principale des éléments de renfort filaires de carcasse reste sensiblement identique par rapport à la direction circonférentielle du support et donc du pneumatique.

En outre, en conservant l'angle initial A3 dans chaque portion axialement latérale et un angle ACS, en valeur absolue, strictement inférieur à 80° dans la portion axialement centrale, le pneumatique présente les propriétés d'un pneumatique radial conférées par les éléments de renfort filaires de carcasse radiaux dans les flancs et les propriétés d'un pneumatique comprenant une armature de sommet triangulée.

Dans des modes de réalisation dans lesquels la direction principale de chaque élément de renfort filaire de carcasse présente, entre les portions axialement centrale et axialement latérales, des zones de transition où l'angle est sensiblement variable, la portion axialement centrale présente une largeur axiale égale à au moins 40%, de préférence au moins 50% de la largeur axiale de la couche de travail et égale à au plus 90%, de préférence au plus 80% de la largeur axiale de la couche de travail. De préférence, le plan médian du pneumatique coupe cette portion axialement centrale. Plus préférentiellement, cette portion axialement centrale de la ou de chaque couche de carcasse est centrée axialement sur le plan médian du pneumatique. La largeur axiale de la portion axialement centrale dépend notamment du taux de déformation ainsi que des angles initiaux. L'homme du métier saura en faisant varier l'un et ou l'autre de ces paramètres, faire varier la largeur axiale de la portion axialement centrale.

Dans ces modes de réalisation dans lesquels la direction principale de chaque élément de renfort filaire de carcasse présente, entre les portions axialement centrale et axialement latérales, des zones de transition où l'angle est sensiblement variable, chaque portion axialement latérale présente une hauteur radiale égale à au moins 50% de la hauteur radiale du pneumatique et égale à au plus 100% de la hauteur radiale du pneumatique. De préférence, le plan circonférentiel équatorial du pneumatique coupe chaque portion axialement latérale. De façon analogue à la portion axialement centrale, la hauteur radiale de chaque portion axialement latérale dépend notamment du taux de déformation ainsi que des angles initiaux. L'homme du métier saura en faisant varier l'un et ou l'autre de ces paramètres, faire varier hauteur radiale de chaque portion axialement latérale.

Pour la plupart des dimensions de pneumatiques pour véhicule de tourisme, en partant d'un angle initial A3 allant, en valeur absolue, de 80° à 90° et en obtenant un angle AT allant, en valeur absolue, de 27° à 40°, l'angle ACS va, en valeur absolue, de 50° à 75°.

L'angle initial A3 allant en valeur absolue, conformément à l'invention, de 80° à 90°, les portions axiales des éléments de renfort filaires de carcasse présents dans la portion axialement centrale de l'ensemble de carcasse subissent une rotation entrainant une diminution de l'angle formé par leur direction principale. Cette diminution est dépendante du taux de déformation ainsi que de l'angle initial formé par la direction principale de chaque élément de renfort filaire de travail avec la direction circonférentielle du support avant l'étape de déformation. Le taux de déformation est déterminé de façon connue par l'homme du métier en fonction du rapprochement axial des bords axiaux du ou des ensemble(s) de carcasse et de l'agrandissement radial de l'assemblage entre sa forme cylindrique et sa forme torique. La détermination des angles initiaux en fonction des angles finaux ou inversement dépend, de façon connue de l'homme du métier, du taux de déformation comme cela est expliqué dans FR2797213 et dans FR1413102.

Dans les modes de réalisation dans lesquels chaque portion axialement latérale est enroulée autour de chaque élément de renfort circonférentiel, chaque portion axialement latérale de la couche de carcasse comprend préférentiellement :
- une portion axialement latérale intérieure agencée axialement entre la portion axialement centrale et chaque élément de renfort circonférentiel et dans laquelle la direction principale de chaque élément de renfort filaire de carcasse forme, avec la direction circonférentielle du pneumatique, un angle ACF1,
- une portion axialement latérale extérieure agencée axialement entre chaque élément de renfort circonférentiel et chaque bord axial de la couche de carcasse et dans laquelle la direction principale de chaque élément de renfort filaire de carcasse forme, avec la direction circonférentielle du pneumatique, un angle ACF2 d'orientation opposée à l'angle ACF1 tel que |ACF1-ACF2-180|≤20°, de préférence |ACF1-ACF2-180|≤10° et plus préférentiellement |ACF1-ACF2-180| est sensiblement nulle. La portion axialement latérale intérieure est agencée axialement à l'intérieure de la portion axialement latérale extérieure.

En partant d'un angle initial A3 conforme à l'invention, chaque angle ACF1 et ACF2 va, en valeur absolue, de 80° à 90°, de préférence de 85° à 90° et plus préférentiellement est sensiblement égal à 90°.

Afin d'obtenir les angles ACS et ACF, on utilise un procédé dans lequel on déforme l'assemblage de forme sensiblement cylindrique de façon à obtenir l'assemblage de forme sensiblement torique de sorte que, à l'issue de l'étape de déformation, la direction principale de chaque élément de renfort filaire de carcasse forme, avec la direction circonférentielle du support :
- un angle final B3S, en valeur absolue, strictement inférieur à 80°, dans une portion axialement centrale de l'ensemble de carcasse s'étendant axialement à l'aplomb radial de l'ensemble de travail et destiné à former la portion axialement centrale de la couche de carcasse,
- un angle final B3F allant, en valeur absolue, de 80° à 90°, de préférence de 85° à 90° et plus préférentiellement est sensiblement égal à 90°, dans deux portions axialement latérales de l'ensemble de carcasse s'étendant chacune axialement entre la portion axialement centrale et chaque bord axial de l'ensemble de carcasse et chacune destiné à former chaque portion axialement latérale de la couche de carcasse.

Dans la plupart des modes de réalisation, les éventuelles étapes entre l'étape de déformation et l'étape de réticulation n'engendrent pas de variation de l'angle B3S. L'angle final B3S est donc sensiblement égal à l'angle ACS. Ainsi, on a B3S qui va, en valeur absolue, de 50° à 75°.

Dans d'autres modes de réalisation, une légère diminution de l'angle final B3S peut intervenir lors des éventuelles étapes entre l'étape de déformation et l'étape de réticulation, par exemple lors d'une étape de moulage de l'ébauche crue dans un moule durant laquelle l'ébauche crue subit une déformation radiale et circonférentielle de moulage non négligeable par rapport à la déformation subie lors de l'étape de déformation.

Dans certains modes de réalisation utilisant des étapes entre l'étape de déformation et l'étape de réticulation, le procédé comprend les étapes suivantes :
- on moule une ébauche crue du pneumatique obtenue à partir de l'assemblage de forme sensiblement torique en expansant radialement et circonférentiellement l'ébauche crue,
- on réticule l'ébauche crue de forme sensiblement torique expansée de façon à obtenir le pneumatique.

De façon préférentielle, préalablement à l'étape de réticulation, on agence, radialement à l'extérieur de l'ensemble de travail, une bande de matériau polymérique destiné à former la bande de roulement, de façon à former l'ébauche crue.

Afin d'obtenir l'angle AT pour la plupart des dimensions de pneumatiques pour véhicule de tourisme, on utilise un procédé dans lequel l'ensemble de travail étant délimité axialement par deux bords axiaux de l'ensemble de travail et comprenant les éléments de renfort filaires de travail s'étendant sensiblement parallèlement les uns aux autres axialement d'un bord axial à l'autre bord axial de l'ensemble de travail, chaque élément de renfort filaire de travail s'étend, dans l'ensemble de travail, selon une direction principale de chaque élément de renfort filaire de travail formant, avec la direction circonférentielle du support, un angle initial A2, allant de 25° à 50°. De façon implicite, l'angle initial A2 est constant lorsqu'on se déplace axialement d'un bord axial à l'autre bord axial de l'ensemble de travail.

Dans la plupart des modes de réalisation dans lesquels les éventuelles étapes entre l'étape de déformation et l'étape de réticulation n'engendrent pas de variation de l'angle final B2 formé par la direction principale de chaque élément de renfort filaire de carcasse avec la direction circonférentielle du support à l'issue de l'étape de déformation, l'angle final B2 est sensiblement égal à l'angle AT. Ainsi, on déforme l'assemblage de forme sensiblement cylindrique autour de l'axe principal du support de façon à obtenir l'assemblage de forme sensiblement torique autour de l'axe principal du support de sorte que, à l'issue de l'étape de déformation, la direction principale de chaque élément de renfort filaire de travail forme, avec la direction circonférentielle du support, un angle final B2 allant, en valeur absolue, de 27° à 40°, de préférence de 30° à 37° et plus préférentiellement de 30° à 35°.

Dans un mode de réalisation permettant de fabriquer des pneumatiques comprenant une armature de frettage agencée radialement à l'extérieur de l'armature de travail, postérieurement à l'étape de déformation, on agence, radialement autour de l'assemblage de forme sensiblement torique autour de l'axe principal du support, un ensemble de frettage destiné à former l'armature de frettage, l'ensemble de frettage étant formé par enroulement hélicoïdal d'un ou de plusieurs éléments de renfort filaires de frettage ou d'une nappe de frettage obtenue par noyage d'un ou de plusieurs éléments de renfort filaire de frettage dans une matrice élastomérique.

Lors de cette étape de procédé, l'étape d'agencement de l'ensemble de frettage est réalisée de façon à ce que le ou chaque élément de renfort filaire de frettage s'étende axialement entre deux bords axiaux de l'ensemble de frettage selon une direction principale du ou de chaque élément de renfort filaire de frettage. L'angle formé par la direction principale du ou de chaque élément de renfort filaire de frettage avec la direction circonférentielle du support est avantageusement, en valeur absolue, inférieur ou égal à 10°, de préférence inférieur ou égal à 7° et plus préférentiellement inférieur ou égal à 5°.

### PNEUMATIQUE SELON L'INVENTION

Le pneumatique selon l'invention est obtenu par un procédé tel que défini ci-dessus.

Dans un mode de réalisation permettant d'améliorer les performances du pneumatique, notamment en rigidité de dérive et à haute vitesse, le pneumatique comprend une armature de frettage agencée radialement à l'extérieur de l'armature de travail, l'armature de frettage étant délimitée axialement par deux bords axiaux de l'armature de frettage et comprenant au moins un élément de renfort filaire de frettage enroulé circonférentiellement hélicoïdalement de façon à s'étendre axialement entre les bords axiaux de l'armature de frettage selon une direction principale formant, avec la direction circonférentielle du pneumatique, un angle AF, en valeur absolue, inférieur ou égal à 10°, de préférence inférieur ou égal à 7° et plus préférentiellement inférieur ou égal à 5°. L'armature de frettage est radialement intercalée entre l'armature de travail et la bande de roulement.

Dans une variante, l'armature de carcasse comprend une unique couche de carcasse. Dans cette variante, l'armature de carcasse est, à l'exception de l'unique couche de carcasse, dépourvue de toute couche renforcée par des éléments de renfort filaires. Les éléments de renfort filaires de telles couches renforcées exclues de l'armature de carcasse du pneumatique comprennent les éléments de renfort filaires métalliques et les éléments de renfort filaires textiles. De façon très préférentielle, l'armature de carcasse est constituée par l'unique couche de carcasse.

Dans une autre variante, l'armature de carcasse comprend deux couches de carcasse, les directions principales des éléments de renfort filaires de carcasse des deux couches de carcasse étant sensiblement parallèles les unes aux autres.

Dans le pneumatique selon l'invention, le sommet comprend la bande de roulement et l'armature de sommet. On entend par bande de roulement une bande de matériau polymérique, de préférence élastomérique, délimitée :
- radialement vers l'extérieur, par une surface destinée à être au contact d'un sol et
- radialement vers l'intérieur, par l'armature de sommet.

La bande de matériau polymérique est constituée d'une couche d'un matériau polymérique, de préférence élastomérique ou bien constituée d'un empilement de plusieurs couches, chaque couche étant constituée d'un matériau polymérique, de préférence élastomérique.

Dans un mode de réalisation avantageux, l'armature de sommet comprend une unique armature de frettage et une unique armature de travail. Ainsi, l'armature de sommet est, à l'exception de l'armature de frettage et de l'armature de travail, dépourvue de toute armature renforcée par des éléments de renfort filaires. Les éléments de renfort filaires de telles armatures exclues de l'armature de sommet du pneumatique comprennent les éléments de renfort filaires métalliques et les éléments de renfort filaires textiles. De façon très préférentielle, l'armature de sommet est constituée de l'armature de frettage et de l'armature de travail.

Dans un mode de réalisation très préférentiel, le sommet est, à l'exception, de l'armature de sommet, dépourvue de toute armature renforcée par des éléments de renfort filaires. Les éléments de renfort filaires de telles armatures exclues du sommet du pneumatique comprennent les éléments de renfort filaires métalliques et les éléments de renfort filaires textiles. De façon très préférentielle, le sommet est constitué par la bande de roulement et l'armature de sommet.

Dans un mode de réalisation très préférentiel, l'armature de carcasse est agencée directement radialement au contact de l'armature de sommet et l'armature de sommet est agencée directement radialement au contact de la bande de roulement. Dans ce mode de réalisation très préférentiel, l'armature de frettage et la couche de travail sont avantageusement agencées directement radialement au contact l'une de l'autre.

Par directement radialement au contact, on comprend que les objets considérés directement radialement au contact l'un de l'autre, ici les couches, armatures ou la bande de roulement, ne sont séparés radialement par aucun objet, par exemple par aucune couche, armature ni bande qui serait interposée radialement entre les objets considérés directement radialement au contact l'un de l'autre.

De façon à garantir préférentiellement une triangulation efficace du sommet du pneumatique, la direction principale du ou de chaque élément de renfort filaire de frettage, la direction principale de chaque élément de renfort filaire de travail et la direction principale de chaque élément de renfort filaire de carcasse forment, avec la direction circonférentielle du pneumatique, dans une portion du pneumatique comprise axialement entre les bords axiaux de la couche ou de l'armature axialement la moins large parmi la couche de travail et l'armature de frettage, des angles deux à deux différents en valeur absolue. On parle également de maillage triangulaire formé par les éléments de renfort filaires de frettage, de travail et de carcasse.

En d'autres termes, le ou chaque élément de renfort filaire de frettage s'étendant selon une direction principale de frettage, chaque élément de renfort filaire de travail s'étendant selon une direction principale de travail, chaque élément de renfort filaire de carcasse s'étendant selon une direction principale de carcasse, ces directions de frettage, de travail et de carcasse sont deux à deux différentes dans la portion du pneumatique délimitée axialement par les bords axiaux de la couche ou de l'armature axialement la moins large parmi la couche de travail et l'armature de frettage.

Afin d'améliorer encore davantage la triangulation du sommet du pneumatique, la direction principale de chaque élément de renfort filaire de travail et la direction principale de chaque élément de renfort filaire de carcasse forment, avec la direction circonférentielle du pneumatique, dans une portion du pneumatique comprise axialement entre les bords axiaux de la couche de travail, des angles d'orientations opposées.

Avantageusement, les éléments de renfort filaires de chaque couche sont noyés dans une matrice élastomérique. Les différentes couches peuvent comprendre la même matrice élastomérique ou bien des matrices élastomériques distinctes.

Par matrice élastomérique, on entend une matrice présentant, à l'état réticulé, un comportement élastomérique. Une telle matrice est avantageusement obtenue par réticulation d'une composition comprenant au moins un élastomère et au moins un autre composant. De préférence, la composition comprenant au moins un élastomère et au moins un autre composant comprend un élastomère, un système de réticulation et une charge. Les compositions utilisées pour ces couches sont des compositions conventionnelles pour calandrage de renforts, typiquement à base de caoutchouc naturel ou autre élastomère diénique, d'une charge renforçante telle que du noir de carbone, d'un système de vulcanisation et des additifs usuels. L'adhésion entre les éléments de renfort filaires et la matrice dans laquelle ils sont noyés est assurée par exemple par une composition adhésive usuelle, par exemple une colle du type RFL ou colle équivalente.

Avantageusement, chaque élément de renfort filaire de travail est métallique. Par élément filaire métallique, on entend par définition un élément filaire formé d'un ou d'un assemblage de plusieurs monofilaments élémentaires constitués intégralement (pour 100% des fils) d'un matériau métallique. Un tel élément filaire métallique est préférentiellement mis en oeuvre avec un ou des fils en acier, plus préférentiellement en acier perlitique (ou ferrito-perlitique) au carbone désigné ci-après par "acier au carbone", ou encore en acier inoxydable (par définition, acier comportant au moins 11% de chrome et au moins 50% de fer). Mais il est bien entendu possible d'utiliser d'autres aciers ou d'autres alliages. Lorsqu'un acier au carbone est avantageusement utilisé, sa teneur en carbone (% en poids d'acier) va de préférence de 0,05% à 1,2%, notamment de 0,5% à 1,1% ; ces teneurs représentent un bon compromis entre les propriétés mécaniques requises pour le pneumatique et la faisabilité des fils. Le métal ou l'acier utilisé, qu'il s'agisse en particulier d'un acier au carbone ou d'un acier inoxydable, peut être lui-même revêtu d'une couche métallique améliorant par exemple les propriétés de mise en oeuvre du câble métallique et/ou de ses éléments constitutifs, ou les propriétés d'usage du câble et/ou du pneumatique eux-mêmes, telles que les propriétés d'adhésion, de résistance à la corrosion ou encore de résistance au vieillissement. Selon un mode de réalisation préférentiel, l'acier utilisé est recouvert d'une couche de laiton (alliage Zn-Cu) ou de zinc. Chaque monofilament élémentaire métallique est, comme décrit ci-dessus, de préférence en acier au carbone, et présente une résistance mécanique allant de 1000 MPa à 5000 MPa. De telles résistances mécaniques correspondent aux grades d'acier couramment rencontrés dans le domaine du pneumatique, à savoir, les grades NT (Normal Tensile), HT (High Tensile), ST (Super Tensile), SHT (Super High Tensile), UT (Ultra Tensile), UHT (Ultra High Tensile) et MT (Mega Tensile), l'utilisation de résistances mécaniques élevées permettant éventuellement un renforcement amélioré de la matrice dans laquelle le câble est destiné à être noyé et un allègement de la matrice ainsi renforcée. Le ou l'assemblage de plusieurs monofilaments élémentaires peut être revêtu d'un matériau polymérique, par exemple comme cela est décrit dans US20160167438.

On comprendra aisément à la lumière de la description générale qui précède et de la description des figures qui suit que les angles AT, ACS, ACF, ACF1, ACF2 et AF caractérisent des angles dans le pneumatique final, que les angles A1, A2, A3 caractérisent des angles avant l'étape de déformation et que les angles B2, B3S, B3F caractérisent des angles après l'étape de déformation et avant l'étape de réticulation.

### DESCRIPTION DES EXEMPLES

L'invention ainsi que ses avantages seront aisément compris à la lumière de la description détaillée et des exemples de réalisation non limitatifs qui suivent, ainsi que des figures 1 à 14 relatives à ces exemples dans lesquels :
- la figure 1 est une vue en coupe dans un plan de coupe méridien d'un pneumatique selon l'invention;
- la figure 2 est une vue schématique en arraché du pneumatique de la figure 1 illustrant l'agencement des éléments de renfort filaires à l'aplomb radial et en surplomb radial de la couche de travail;
- la figure 3 est une vue schématique des éléments de renfort filaires de carcasse agencés dans le flanc du pneumatique de la figure 1;
- la figure 4 est une vue dans un plan de coupe perpendiculaire à la direction axiale d'une portion du sommet du pneumatique de la figure 1;
- les figures 5 à 14 illustrent les différentes étapes du procédé selon l'invention permettant de fabriquer le pneumatique de la figure 1.

Dans les figures relatives au pneumatique, on a représenté un repère X, Y, Z correspondant aux directions habituelles respectivement circonférentielle (X), axiale (Y) et radiale (Z) d'un pneumatique. Dans les figures relatives au procédé, on a représenté un repère x, y, z correspondant aux directions habituelles respectivement circonférentielle (x), axiale (y) et radiale (z) d'un support de fabrication déformable entre une forme sensiblement cylindrique et une forme torique autour de l'axe y.

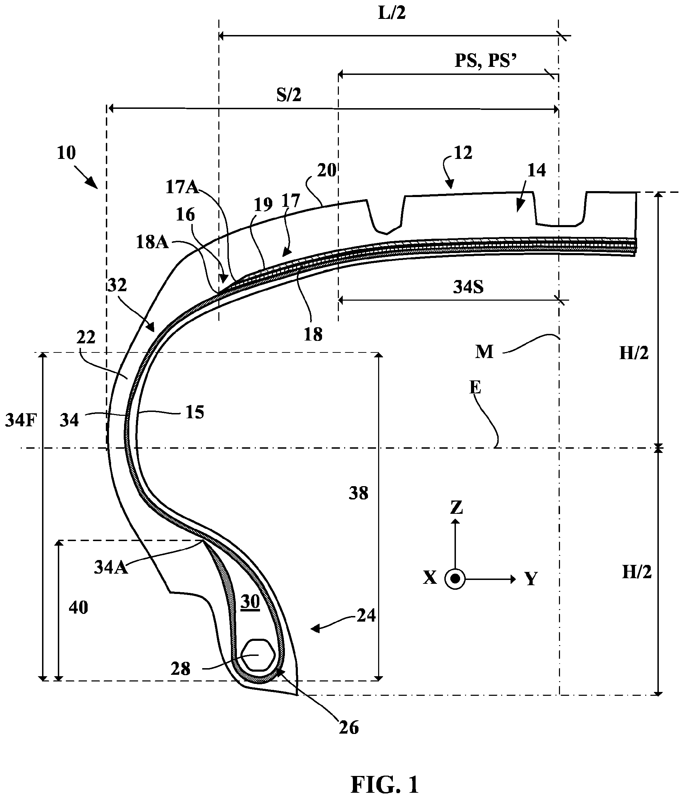

On a représenté sur la figure 1 un pneumatique, conforme à l'invention et désigné par la référence générale 10. Le pneumatique 10 est sensiblement de révolution autour d'un axe sensiblement parallèle à la direction axiale Y Le pneumatique 10 est ici destiné à un véhicule de tourisme et présente des dimensions 245/45R18.

Le pneumatique 10 comprend un sommet 12 comprenant une bande de roulement 20 destinée à venir en contact avec un sol lors du roulage et une armature de sommet 14 s'étendant dans le sommet 12 selon la direction circonférentielle X. Le pneumatique 10 comprend également une couche d'étanchéité 15 à un gaz de gonflage étant destiné à délimiter une cavité interne fermée avec un support de montage du pneumatique 10 une fois le pneumatique 10 monté sur le support de montage, par exemple une jante.

L'armature de sommet 14 comprend une unique armature de travail 16 comprenant une couche de travail 18 et une unique armature de frettage 17 comprenant une unique couche de frettage 19. Ici, l'armature de travail 16 comprend une unique couche de travail 18 et est, en l'espèce, constituée de l'unique couche de travail 18. Dans la description qui suit, on parlera, par soucis de simplification de la couche de travail 18 sans rappeler à chaque fois que cette couche est unique. L'armature de frettage 17 est constituée de la couche de frettage 19.

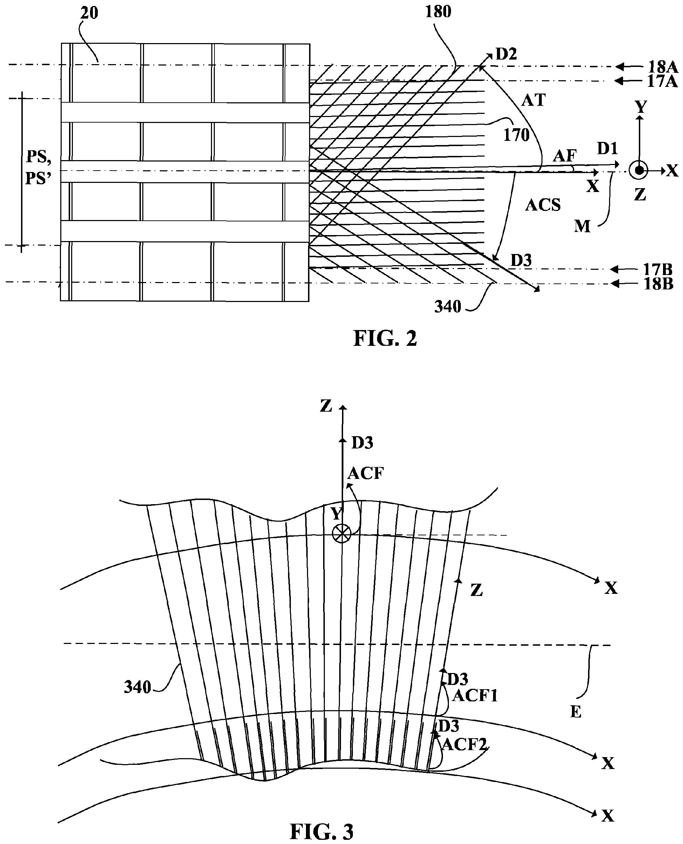

L'armature de sommet 14 est surmontée radialement de la bande de roulement 20. Ici, l'armature de frettage 17, ici la couche de frettage 19, est agencée radialement à l'extérieur de l'armature de travail 16 et est donc radialement intercalée entre l'armature de travail 16 et la bande de roulement 20. Dans le mode de réalisation illustré sur les figures 1 et 2, l'armature de frettage 17 présente une largeur axiale plus petite que la largeur axiale de la couche de travail 18. Ainsi, l'armature de frettage 17 est axialement la moins large de la couche de travail 18 et de l'armature de frettage 17.

Le pneumatique 10 comprend deux flancs 22 prolongeant le sommet 12 radialement vers l'intérieur. Le pneumatique 10 comporte en outre deux bourrelets 24 radialement intérieurs aux flancs 22. Chaque flanc 22 relie respectivement chaque bourrelet 24 au sommet 12.

Chaque bourrelet 24 comprend au moins un élément de renfort circonférentiel 26, en l'occurrence une tringle 28 surmontée radialement d'une masse de gomme 30 de bourrage.

Le pneumatique 10 comprend une armature 32 de carcasse ancrée dans chaque bourrelet 24. L'armature de carcasse 32 s'étend dans chaque flanc 22 et radialement intérieurement au sommet 12. L'armature de sommet 14 est agencée radialement entre la bande de roulement 20 et l'armature de carcasse 32.

L'armature de carcasse 32 comprend une couche de carcasse 34. Ici, l'armature de carcasse 32 comprend une unique couche de carcasse 34, et en l'espèce est constituée de l'unique couche de carcasse 34. Dans ce mode de réalisation, on parlera, par soucis de simplification de la couche de carcasse 34 sans rappeler à chaque fois que cette couche est unique.

L'armature de carcasse 32 est agencée directement radialement au contact de l'armature de sommet 14. L'armature de sommet 14 est agencée directement radialement au contact de la bande de roulement 20. L'armature de frettage 17 et la couche de travail 18 sont agencées directement radialement au contact l'une de l'autre.

On va maintenant décrire les couches de frettage 19, la couche de travail 18 et la couche de carcasse 34 en référence aux figures 1 à 4.

L'armature de frettage 17, ici la couche de frettage 19, est délimitée axialement par deux bords axiaux 17A, 17B de l'armature de frettage 17. L'armature de frettage 17 comprend plusieurs éléments de renfort filaires de frettage 170 enroulés circonférentiellement hélicoïdalement de façon à s'étendre axialement entre le bord axial 17A et l'autre bord axial 17B de la couche de frettage 17 selon une direction principale D1 de chaque élément de renfort filaire de frettage 170. La direction principale D1 forme, avec la direction circonférentielle X du pneumatique 10, un angle AF, en valeur absolue, inférieur ou égal à 10°, de préférence inférieur ou égal à 7° et plus préférentiellement inférieur ou égal à 5°. Ici, AF=-5°.

La couche de travail 18 est délimitée axialement par deux bords axiaux 18A, 18B de la couche de travail 18. La couche de travail 18 comprend des éléments de renfort filaires de travail 180 s'étendant axialement du bord axial 18A à l'autre bord axial 18B de la couche de travail 18 les uns sensiblement parallèlement aux autres. Chaque élément de renfort filaire de travail 180 s'étend selon une direction principale D2 de chaque élément de renfort filaire de travail 180. La direction D2 forme, avec la direction circonférentielle X du pneumatique 10, un angle AT, en valeur absolue, allant de 30° à 37° et plus préférentiellement allant de 30° à 35°. Ici, AT=-35°.

La couche de carcasse 34 est délimitée axialement par deux bords axiaux 34A, 34B de la couche de carcasse 34. La couche de carcasse 34 comprend des éléments de renfort filaires de carcasse 340 s'étendant axialement du bord axial 34A à l'autre bord axial 34B (non représenté) de la couche de carcasse 34. La couche de carcasse 34 comprend une portion axialement centrale 34S s'étendant axialement à l'aplomb radial de la couche de travail 18 et deux portions axialement latérales 34F s'étendant axialement entre la portion axialement centrale 34S et chaque bord axial 34A, 34B. Chaque portion axialement latérale 34F est enroulée autour de chaque élément de renforcement circonférentiel 26. Chaque portion axialement latérale 34F comprend une portion axialement latérale intérieure 38 agencée axialement entre la portion axialement centrale 34S et chaque élément de renfort circonférentiel 26 ainsi qu'une portion axialement latérale extérieure 40 agencée axialement entre chaque élément de renfort circonférentiel 26 et chaque bord axial 34A, 34B de la couche de carcasse 34. La masse de gomme 30 de bourrage est intercalée entre les portions 38, 40 axialement latérales intérieure et extérieure.

Chaque élément de renfort filaire de carcasse 340 s'étend selon une direction principale D3 de chaque élément de renfort filaire de carcasse 340 formant, avec la direction circonférentielle X du pneumatique 10, un angle ACS, en valeur absolue, strictement inférieur à 80° dans la portion axialement centrale 34S de la couche de carcasse 34. Avantageusement, dans cette portion axialement centrale 34S de la couche de carcasse 34, la direction principale D3 de chaque élément de renfort filaire de carcasse 340 forme, avec la direction circonférentielle X du pneumatique 10, un angle ACS, en valeur absolue, allant de 50° à 75°. Ici, ACS=+65°.

La portion axialement centrale 34S de la couche de carcasse 34 présente une largeur axiale égale à au moins 40%, de préférence au moins 50% de la largeur axiale L de la couche de travail 18 et égale à au plus 90%, de préférence au plus 80% de la largeur axiale L de la couche de travail 18 et en l'espèce égale à 60% de la couche de travail 18. Le plan médian M du pneumatique 10 coupe cette portion 34S. Plus préférentiellement, cette portion 34S est centrée axialement sur le plan médian M du pneumatique 10.

Comme illustré sur les figures 1 et 3, la direction principale D3 de chaque élément de renfort filaire de carcasse 340 forme, avec la direction circonférentielle X du pneumatique 10, un angle ACF, en valeur absolue, allant de 80° à 90°, de préférence de 85° à 90° et plus préférentiellement est sensiblement égal à 90° dans chaque portion axialement latérale 34F de la couche de carcasse 34 s'étendant radialement dans chaque flanc 22. Ici, ACF=+90°.

Chaque portion 34F de la couche de carcasse 34 s'étendant radialement dans chaque flanc 22 présente une hauteur radiale égale à au moins 50% de la hauteur radiale H du pneumatique 10 et égale à au plus 100% de la hauteur radiale H du pneumatique 10 et en l'espèce égale à 95% de la hauteur radiale H du pneumatique 10. Le plan circonférentiel équatorial E du pneumatique 10 coupe chaque portion 34F de la couche de carcasse 34 située dans chaque flanc 22.

La direction principale D3 de chaque élément de renfort filaire de carcasse 340 forme, avec la direction circonférentielle X du pneumatique 10, un angle ACF1 dans chaque portion axialement latérale intérieure 38 et un angle ACF2 dans chaque portion axialement latérale extérieure 40. Les angles ACF1 et ACF2 sont d'orientations opposées. Chaque angle ACF1 et ACF2 va, en valeur absolue, de 80° à 90°, de préférence de 85° à 90° et plus préférentiellement est respectivement sensiblement égal à +90° et -90°. On notera que |ACF1-ACF2-180|≤20°, de préférence |ACF1-ACF2-180|≤10° et ici |ACF1-ACF2-180| est sensiblement nulle.

Comme illustré sur la figure 2, la direction principale D2 de chaque élément de renfort filaire de travail 180 et la direction principale D3 de chaque élément de renfort filaire de carcasse 340 forment, avec la direction circonférentielle X du pneumatique 10, dans une portion PS du pneumatique 10 comprise axialement entre les bords axiaux 18A, 18B de la couche de travail 18, des angles AT et ACS d'orientations opposées. En effet, ici, AT=-35° et ACS=+65°. En outre, la direction principale D1 de chaque de renfort filaire de frettage 170, la direction principale D2 de chaque élément de renfort filaire de travail 180 et la direction principale D3 de chaque élément de renfort filaire de carcasse 340 forment, avec la direction circonférentielle X du pneumatique 10, dans une portion PS' du pneumatique 10 comprise axialement entre les bords axiaux 17A, 17B de l'armature de frettage 17, des angles deux à deux différents en valeur absolue.

D'une façon générale et en particulier dans le mode de réalisation décrit, chaque portion PS, PS' du pneumatique 10 présente une largeur axiale égale à au moins 40%, de préférence au moins 50% de la largeur axiale L de la couche de travail 18 et égale à au plus 90%, de préférence au plus 80% de la largeur axiale L de la couche de travail 18 et en l'espèce égale à 60% de la largeur axiale L de la couche de travail 18. Le plan médian M du pneumatique 10 coupe chaque portion PS, PS' du pneumatique 10. Plus préférentiellement, chaque portion PS, PS' du pneumatique 10 est centrée axialement sur le plan médian M du pneumatique 10.

Chaque élément de renfort filaire de travail 180 est un assemblage de deux monofilaments en acier présentant chacun un diamètre égal à 0,30 mm, les deux monofilaments en acier étant enroulés l'un avec l'autre au pas de 14 mm.

Chaque élément de renfort filaire de carcasse 340 comprend classiquement deux brins multifilamentaires, chaque brin multifilamentaire étant constitué d'un filé de monofilaments de polyesters, ici de PET, ces deux brins multifilamentaires étant surtordus individuellement à 240 tours par mètre dans un sens puis retordus ensemble à 240 tours par mètre dans le sens opposé. Ces deux brins multifilamentaires sont enroulés en hélice l'un autour de l'autre. Chacun de ces brins multifilamentaires présente un titre égal à 220 tex.

Chaque élément de renfort filaire de frettage 170 est par exemple tel que ceux décrits dans WO2016/166056 A1.

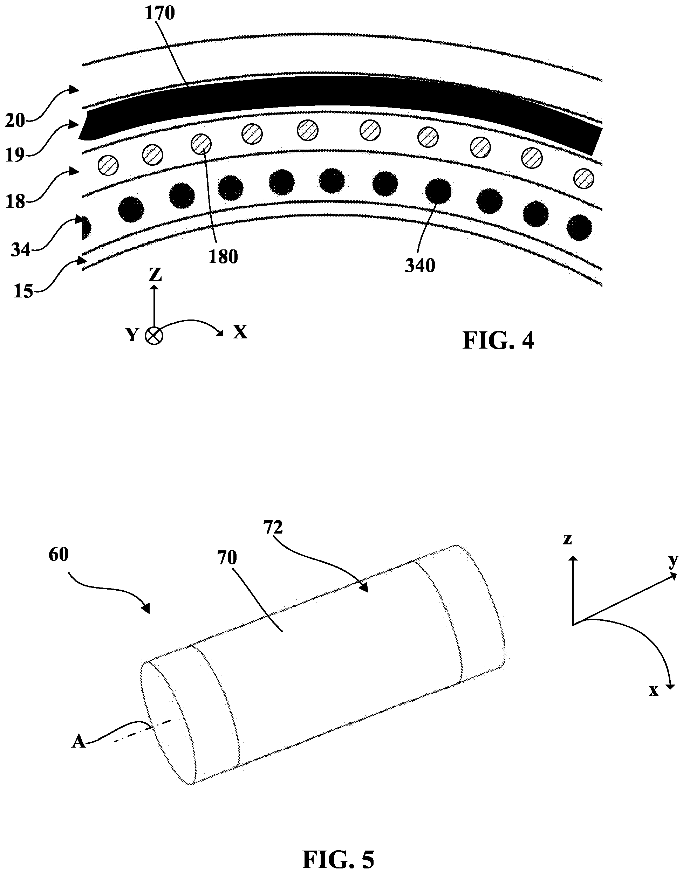

Le pneumatique 10 est obtenu par un procédé selon l'invention que l'on va décrire en référence aux figures 5 à 14.

Tout d'abord, on fabrique un ensemble de travail 50 et un ensemble de carcasse 52 en agençant parallèlement les uns aux autres les éléments de renfort filaires 180 et 340 de chaque ensemble 50 et 52 et en les noyant, par exemple par calandrage, dans une composition non réticulée comprenant au moins un élastomère, la composition étant destinée à former une matrice élastomérique une fois réticulée. On obtient une nappe dite droite, dans laquelle les éléments de renfort filaires sont parallèles les uns aux autres et sont parallèles à la direction principale de la nappe.

Puis, pour la nappe de travail, on découpe des portions de la nappe de travail droite selon un angle de découpe et on aboute ces portions les unes aux autres de façon à obtenir une nappe de travail dite à angle, dans laquelle les éléments de renfort filaires de travail sont parallèles les uns aux autres et forment un angle avec la direction principale de la nappe de travail égal à l'angle de découpe.

Pour la nappe de carcasse, on découpe des portions de la nappe de carcasse droite perpendiculairement avec la direction principale de la nappe droite de carcasse et on aboute ces portions les unes aux autres de façon à obtenir une nappe de carcasse dite à angle, dans laquelle les éléments de renfort filaires de carcasse sont parallèles les uns aux autres et forment un angle allant de 80° à 90° avec la direction principale de la nappe de carcasse égal à l'angle de découpe.

Dans le mode de réalisation décrit, on obtient d'une part une unique nappe de travail 49 et une unique nappe de carcasse 51 dont la largeur axiale de chacune, c'est-à-dire la dimension selon une direction perpendiculaire aux bords longitudinaux de chaque nappe, est égale à la largeur axiale respectivement de chaque ensemble de travail 50 et de carcasse 52 qui seront formés ultérieurement.

En référence à la figure 5, dans une première étape d'assemblage d'une ébauche crue, on agence une nappe d'étanchéité 70 autour d'un support 60 présentant une forme sensiblement cylindrique autour de son axe principal A de façon à former un ensemble d'étanchéité 72 destiné à former la couche d'étanchéité 15. Ici, on agence la nappe d'étanchéité 70 par enroulement de la nappe d'étanchéité 70. Le support 60 présente une surface de pose sensiblement cylindrique de rayon égal à 235 mm.

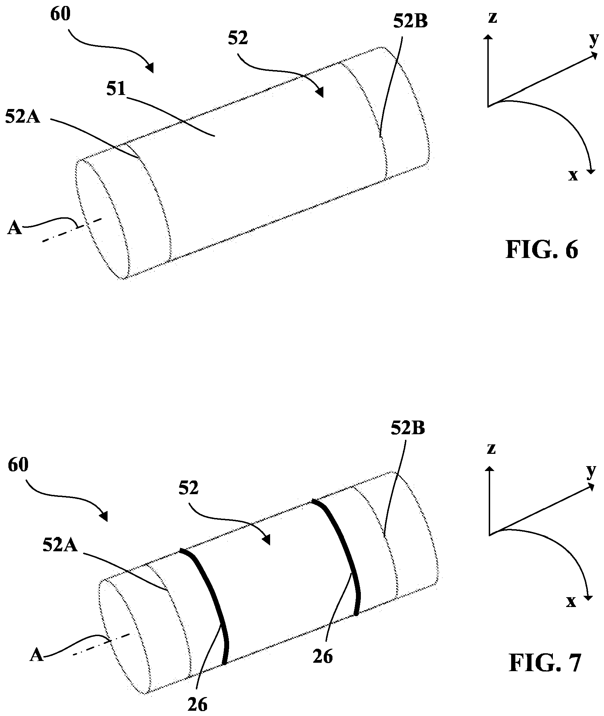

Puis, en référence à la figure 6, radialement à l'extérieur de l'ensemble d'étanchéité 72, on agence, autour du support 60, l'ensemble de carcasse 52 destiné à former la couche de carcasse 34. En l'espèce, on agence l'ensemble de carcasse 52 par enroulement de la nappe de carcasse 51 autour du support 60 de façon à former l'ensemble de carcasse 52. L'ensemble de carcasse 52 est délimité axialement par deux bords axiaux 52A, 52B de l'ensemble de carcasse 52 et comprend les éléments de renfort filaires de carcasse 340 s'étendant sensiblement parallèlement les uns aux autres axialement du bord axial 52A à l'autre bord axial 52B de l'ensemble de carcasse 52. Chaque élément de renfort filaire de carcasse 340 s'étend, dans l'ensemble de carcasse 51, selon une direction principale K3 de chaque élément de renfort filaire de carcasse 340 dans l'ensemble de carcasse 52. La direction principale K3 forme, avec la direction circonférentielle x du support 60, un angle initial A3 de chaque élément de renfort filaire de carcasse 340 allant, en valeur absolue, de 80° à 90°, de préférence allant de 85° à 90° et ici sensiblement égal à 90°.

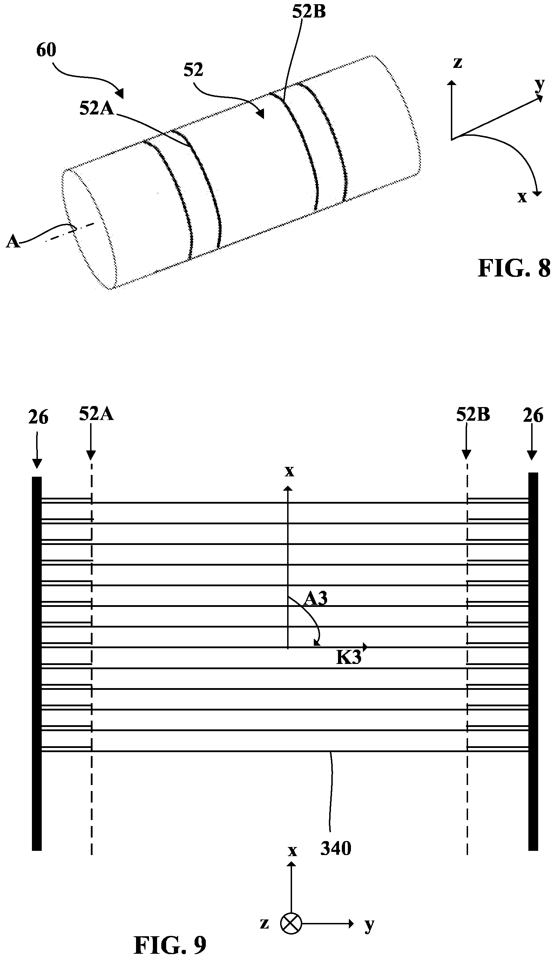

En référence aux figures 7 et 8, ensuite, on agence les deux éléments de renfort circonférentiels 26 autour de l'ensemble de carcasse 52 et on retourne axialement vers l'intérieur chaque bord axial 52A, 52B de l'ensemble de carcasse 52 de façon à recouvrir radialement chaque élément de renfort circonférentiel 26 par chaque bord axial 52A, 52B de l'ensemble de carcasse 52 et à ce que l'ensemble de carcasse 52 soit enroulé axialement autour de chaque élément de renfort circonférentiel 26.

On a représenté sur la figure 9 un schéma illustrant l'agencement des éléments de renfort filaires 340 de carcasse à l'issue de l'étape de retournement axial des bords axiaux 52A, 52B de l'ensemble de carcasse 52 autour des éléments de renfort circonférentiel 26. Sur cette figure 9, on a représenté l'angle initial A3 décrit ci-dessus.

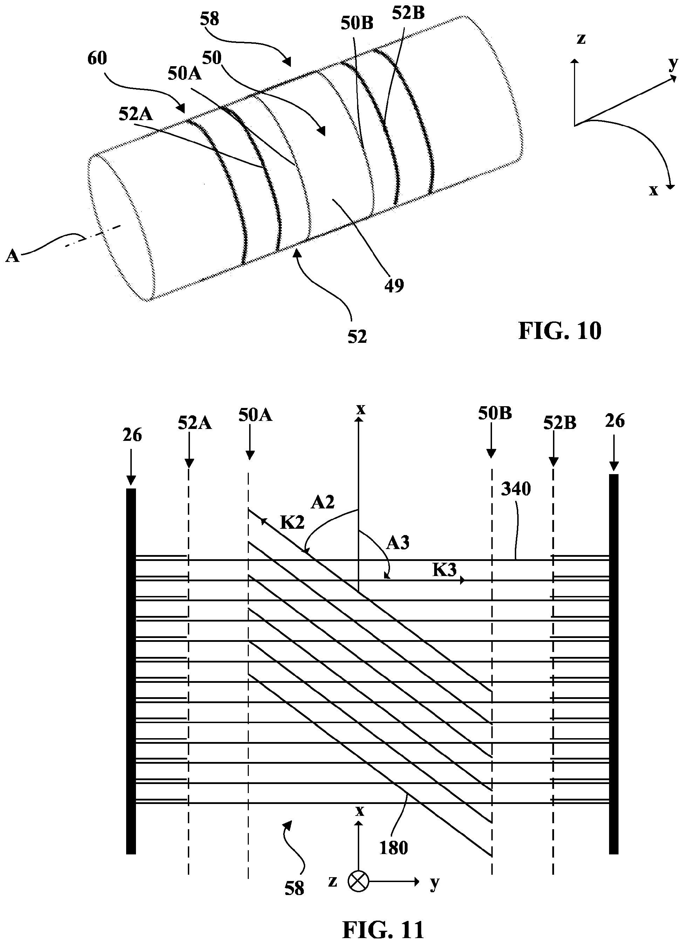

Puis, en référence à la figure 10, on agence, radialement à l'extérieur de l'ensemble de carcasse 52, l'ensemble de travail 50 destiné à former la couche de travail 18. En l'espèce, on agence l'ensemble de travail par enroulement de la nappe de travail 49, radialement à l'extérieur de l'ensemble de carcasse 52, de façon à former l'ensemble de travail 50. L'ensemble de travail 50 est délimité axialement par deux bords axiaux 50A, 50B de l'ensemble de travail 50 et comprend les éléments de renfort filaires de travail 180 s'étendant sensiblement parallèlement les uns aux autres axialement du bord axial 50A à l'autre bord axial 50B de l'ensemble de travail 50. Chaque élément de renfort filaire de travail 180 s'étend, dans l'ensemble de travail 50, selon une direction principale K2 de chaque élément de renfort filaire de travail 180 dans l'ensemble de travail 50. En référence à la figure 11, la direction principale K2 forme, avec la direction circonférentielle x du support 60, un angle initial A2 de chaque élément de renfort filaire de travail 180, en valeur absolue, allant de 25° à 50°. Ici, A2=-39°.

L'ensemble de carcasse 52 et l'ensemble de travail 50 forment alors un assemblage 58 de forme sensiblement cylindrique autour de l'axe principal A du support 60.

On a représenté sur la figure 11 un schéma analogue à celui de la figure 9 illustrant l'agencement des éléments de renfort filaires 340 de carcasse et des éléments de renfort filaires 180 de travail à l'issue de l'étape de formation de l'ensemble de travail 50. Sur cette figure 11, on a représenté les angles initiaux A2 et A3.

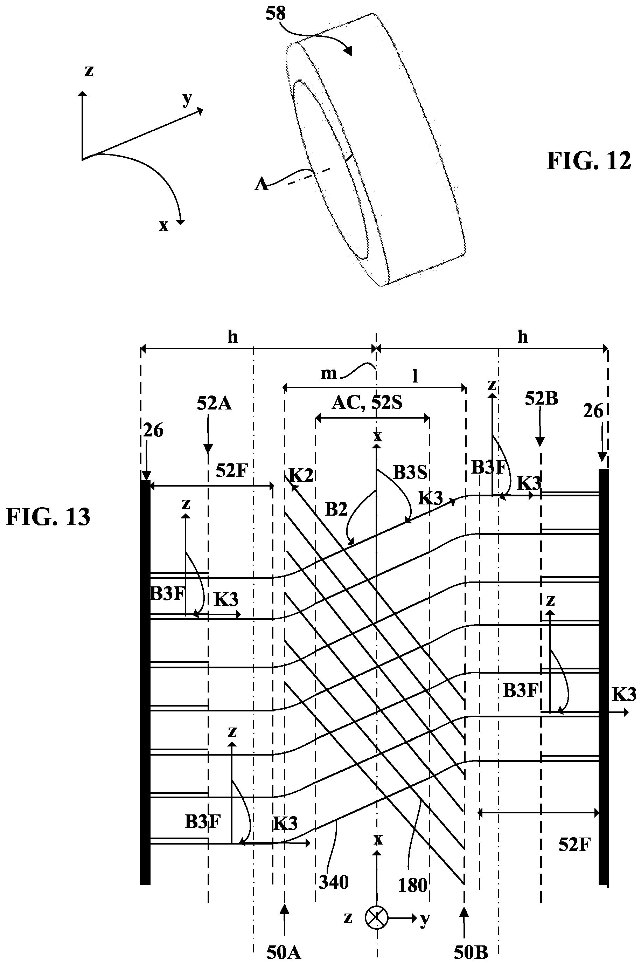

Puis, on déforme l'assemblage 58 de forme sensiblement cylindrique autour de l'axe principal A du support 60 de façon à obtenir l'assemblage 58 de forme sensiblement torique autour de l'axe principal A du support 60. On obtient l'assemblage déformé 58 illustré sur la figure 12. La surface de pose du support 60 présente alors, au niveau du plan médian du support, un rayon égal à 327 mm.

En référence à la figure 13, on déforme l'assemblage 58 de forme sensiblement cylindrique autour de l'axe principal A du support 60 de façon à obtenir un assemblage 58 de forme sensiblement torique autour de l'axe principal A du support 60 de sorte que, à l'issue de l'étape de déformation, la direction principale K3 de chaque élément de renfort filaire de carcasse 340 forme, avec la direction circonférentielle x du support 60, un angle final B3S de chaque élément de renfort filaire de carcasse 340, en valeur absolue, strictement inférieur à 80°, dans une portion axialement centrale 52S de l'ensemble de carcasse 52 s'étendant axialement à l'aplomb radial de l'ensemble de travail 50. Avantageusement, l'angle final B3S va, en valeur absolue, de 50° à 75°. Ici, B3S=+65°. La portion 52S de l'ensemble de carcasse 52 est destinée à former la portion axialement centrale 34S de la couche de carcasse 34.

On déforme l'assemblage 58 de forme sensiblement cylindrique autour de l'axe principal A du support 60 de façon à obtenir l'assemblage 58 de forme sensiblement torique autour de l'axe principal A du support 60 également de sorte que, à l'issue de l'étape de déformation, la direction principale K3 de chaque élément de renfort filaire de carcasse 340 forme, avec la direction circonférentielle x du support 60, un angle final B3F de chaque élément de renfort filaire de carcasse 340 allant, en valeur absolue, de 80° à 90°, dans deux portions axialement latérales 52F de l'ensemble de carcasse 52 s'étendant chacune axialement entre la portion axialement centrale 52S et chaque bord axiale 52A, 52B de l'ensemble de carcasse 52. Chaque portion axialement latérale 52F de l'ensemble de carcasse 52 est destinée à former chaque portion axialement latérale 34F de la couche de carcasse 34. Ici B3F=+90°.

On déforme l'assemblage 58 de forme sensiblement cylindrique autour de l'axe principal A du support 60 de façon à obtenir l'assemblage 58 de forme sensiblement torique autour de l'axe principal A du support 60 également de sorte que, à l'issue de l'étape de déformation, la direction principale K2 de chaque élément de renfort filaire de travail 340 forme, avec la direction circonférentielle x du support 60, un angle final B2 de chaque élément de renfort filaire de travail 340 allant, en valeur absolue, strictement supérieur à 10°. Avantageusement, l'angle final B2 va, en valeur absolue, de 27° à 40°, de préférence de 30° à 37° et plus préférentiellement de 30° à 35°et ici B2=-35°.

La direction principale K2 de chaque élément de renfort filaire de travail 180 et la direction principale K3 de chaque élément de renfort filaire de carcasse 340 forment, avec la direction circonférentielle x du support 60, dans une portion AC de l'assemblage 58 comprise axialement entre les bords axiaux 50A, 50B de l'ensemble de travail 50, des angles finaux B2 et B3S d'orientations opposées. En effet, ici B2=-35° et B3S=+65°.

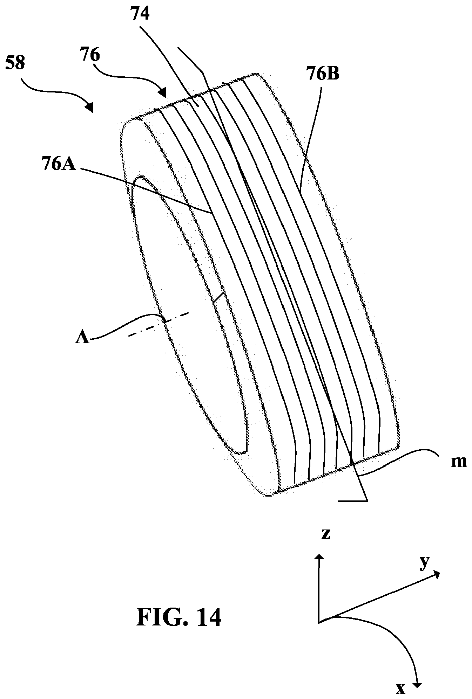

Comme illustré sur la figure 14, on agence, radialement autour de l'assemblage 58 préalablement formé sur le support 60, un ensemble de frettage 76 destiné à former l'armature de frettage 17. Ici, l'ensemble de frettage 76 est formé par enroulement hélicoïdal d'une nappe de frettage 74 sur une forme torique puis l'ensemble de frettage 76 est transféré à l'aide d'un anneau de transfert radialement à l'extérieur de l'assemblage 58 préalablement formé. En variante, on pourra directement enrouler circonférentiellement hélicoïdalement la nappe de frettage 74 autour de l'assemblage 58 préalablement formé de façon à former l'ensemble de frettage 76. La nappe de frettage 74 est fabriquée de façon analogue aux nappes de carcasse 51 et de travail 49 par noyage des éléments de renfort filaires de frettage 170 dans une matrice élastomérique.

Dans le mode de réalisation illustré, l'ensemble de frettage 76 présente une largeur axiale plus petite que la largeur axiale de l'ensemble de travail 50. Ainsi, l'ensemble de frettage 76 est axialement le moins large des ensembles de travail 50 et de frettage 76.

L'étape d'agencement de l'ensemble de frettage 76 est réalisée de façon à ce que chaque élément de renfort filaire de frettage 170 s'étende axialement entre deux bords axiaux 76A, 76B de l'ensemble de frettage 76 selon une direction principale K1 de chaque élément de renfort filaire de frettage 170. L'angle formé par la direction principale K1 de chaque élément de renfort filaire de frettage 170 avec la direction circonférentielle x du support 60 est avantageusement, en valeur absolue, inférieur ou égal à 10°, de préférence inférieur ou égal à 7° et plus préférentiellement inférieur ou égal à 5°.

L'angle A1 formé par la direction principale K1 de chaque élément de renfort filaire de frettage 170 avec la direction circonférentielle x du support 60 est, en valeur absolue, inférieur ou égal à 10°, de préférence inférieur ou égal à 7° et plus préférentiellement inférieur ou égal à 5° et ici égal à 5°.

La direction principale K1 de chaque élément de renfort filaire de frettage 170, la direction principale K2 de chaque élément de renfort filaire de travail 180 et la direction principale K3 de chaque élément de renfort filaire de carcasse 340 forment, avec la direction circonférentielle x du support 60, dans une portion AC' (non illustré) de l'assemblage 58 et de l'ensemble de frettage 76 comprise axialement entre les bords axiaux 76A, 76B de l'ensemble de frettage 76, des angles deux à deux différents en valeur absolue.

Puis, on agence, radialement à l'extérieur de l'ensemble de travail 50 et ici radialement à l'extérieur de l'ensemble de frettage 76, une bande de matériau polymérique destiné à former la bande de roulement 20, de façon à former une ébauche crue du pneumatique 10.

Dans une variante préférée non illustrée, on pourra, sur une forme torique, agencer l'ensemble de frettage 76 puis agencer radialement à l'extérieur de l'ensemble de frettage 76, la bande de matériau polymérique destiné à former la bande de roulement 20 de façon à former un ensemble intermédiaire puis transférer cet ensemble intermédiaire radialement à l'extérieur de l'assemblage 58 préalablement formé sur le support 60.

Ensuite, on moule l'ébauche crue du pneumatique 10 obtenue à partir de l'assemblage préalablement formé 58, de l'ensemble de frettage 76 et de la bande de matériau polymérique, en expansant radialement et circonférentiellement l'ébauche crue.

Puis, on réticule l'ébauche crue de forme sensiblement torique expansée de façon à obtenir le pneumatique 10, par exemple par vulcanisation.

### TESTS COMPARATIFS

On a simulé les rigidités circonférentielles Rxx, les rigidités de cisaillement Gxy de différents pneumatiques non conformes à l'invention T1, T2, P1 et P5 et de pneumatiques conformes à l'invention P2, P3 et P4. Les résultats sont indiqués en base 100 de sorte qu'une valeur supérieure à 100 pour la rigidité circonférentielle Rxx et la rigidité de cisaillement Gxy indique une amélioration de ces rigidités.

Le pneumatique T1 est le pneumatique S2 décrit dans EP3489035. Le pneumatique P3 est le pneumatique 10 décrit précédemment. Tous les pneumatiques sont identiques à l'exception des angles A3, A2, ACS et AT dont les valeurs sont rassemblées dans le tableau 1 ci-dessous.

**Tableau 1**

| Pneumatique | A3 (°) | A2 (°) | ACS (°) | AT (°) | Rxx | Gxy |
|---|---|---|---|---|---|---|
| T1 (S2) | / | / | +43 | -24 | 100 | 100 |
| T2 | +90 | -30 | +54 | -24 | 97 | 82 |
| P1 | +90 | -32 | +57 | -27 | 96 | 92 |
| P2 | +90 | -35 | +61 | -30 | 96 | 102 |
| P3 (10) | +90 | -39 | +65 | -35 | 95 | 105 |
| P4 | +90 | -41 | +67 | -37 | 95 | 102 |
| P5 | +90 | -44 | +69 | -40 | 95 | 96 |

Comme expliqué précédemment, la rigidité de circonférentielle Rxx est peu impactée par les angles AT et ACS. La rigidité de cisaillement Gxy est soit peu impactée (pneumatiques P1 et P5) soit améliorée pour les angles AT plus élevés (pneumatiques P2, P3 et P4). Il n'en reste pas moins que les pneumatiques P1 à P5 présentent l'avantage indéniable d'avoir été tous fabriqués à partir d'une même nappe de carcasse dans laquelle l'angle A3 allait de 80° à 90° qui n'avait pas nécessité d'étape de découpe à un angle spécifique dépendant de la dimension du pneumatique.

L'invention ne se limite pas au mode de réalisation décrit précédemment.

En effet, on pourra tout à fait envisager un pneumatique analogue à celui décrit ci-dessus et dont l'armature de carcasse comprend deux couches de carcasse.

On pourra également mettre en oeuvre l'invention sans que la couche de carcasse ne comprenne de portion axialement latérale enroulée autour de chaque élément de renfort circonférentiel. En effet, d'autres modes d'ancrage de la couche de carcasse 34 sont possibles, par exemple comme décrit dans US5702548.

## Revendications

1. Procédé de fabrication d'un pneumatique (10) comprenant un sommet (12), deux flancs (22), deux bourrelets (24), chaque flanc (22) reliant respectivement chaque bourrelet (24) au sommet (12), le pneumatique (10) comprenant une armature de carcasse (32) ancrée dans chaque bourrelet (24) et s'étendant dans chaque flanc (22) et radialement intérieurement au sommet (12), l'armature de carcasse (32) comprenant au moins une couche de carcasse (34), le sommet (12) comprenant :
- une bande de roulement (20) destinée à venir en contact avec un sol lors du roulage du pneumatique (10),
- une armature de sommet (14) agencée radialement entre la bande de roulement (20) et l'armature de carcasse (32), l'armature de sommet (14) comprenant une armature de travail (16) comprenant une unique couche de travail (18), la couche de travail (18) étant délimitée axialement par deux bords axiaux (18A, 18B) de la couche de travail (18) et comprenant des éléments de renfort filaires de travail (180) s'étendant axialement d'un bord axial (18A, 18B) à l'autre bord axial (18A, 18B) de la couche de travail (18) les uns sensiblement parallèlement aux autres selon une direction principale (D2) de chaque élément de renfort filaire de travail (180) formant, avec la direction circonférentielle (X) du pneumatique (10), un angle AT,
procédé dans lequel :
- on agence, autour d'un support (60) présentant une forme sensiblement cylindrique autour d'un axe principal (A),un ensemble de carcasse (52) destiné à former la au moins une couche de carcasse (34), l'ensemble de carcasse (52) étant délimité axialement par deux bords axiaux (52A, 52B) de l'ensemble de carcasse (52) et comprenant des éléments de renfort filaires de carcasse (340) s'étendant sensiblement parallèlement les uns aux autres axialement d'un bord axial (52A, 52B) à l'autre bord axial (52A, 52B) de l'ensemble de carcasse (52), chaque élément de renfort filaire de carcasse (340) s'étendant, dans l'ensemble de carcasse (52), selon une direction principale (K3) de chaque élément de renfort filaire de carcasse (340) formant, avec la direction circonférentielle (x) du support (60), un angle initial A3 allant, en valeur absolue, de 80° à 90°,
- on agence, radialement à l'extérieur de l'ensemble de carcasse (52), un ensemble de travail (50) destiné à former la couche de travail (18), l'ensemble de carcasse (52) et l'ensemble de travail (50) formant un assemblage (58) de forme sensiblement cylindrique autour de l'axe principal (A) du support (60),
- on déforme l'assemblage (58) de forme sensiblement cylindrique autour de l'axe principal (A) du support (60) de façon à obtenir un assemblage (58) de forme sensiblement torique autour de l'axe principal (A) du support (60),
- on réticule une ébauche crue de pneumatique obtenue à partir de l'assemblage (58) de forme sensiblement torique de façon à obtenir le pneumatique (10),
**caractérisé en ce que** l'angle AT va, en valeur absolue, de 30° à 37°.

2. Procédé selon la revendication précédente, dans lequel l'angle A3 va, en valeur absolue, de 85° à 90° et de préférence est sensiblement égal à 90°.

3. Procédé selon l'une quelconque des revendications précédentes, dans lequel l'angle AT va, en valeur absolue, de 30° à 35°.

4. Procédé selon l'une quelconque des revendications précédentes, dans lequel, chaque bourrelet (24) comprenant un élément de renfort circonférentiel (26), postérieurement à l'étape d'agencement de l'ensemble de carcasse (52) et préalablement à l'étape d'agencement de l'ensemble de travail:
- on agence les deux éléments de renfort circonférentiels (26) autour de l'ensemble de carcasse (52),
- on retourne axialement vers l'intérieur chaque bord axial (52A, 52B) de l'ensemble de carcasse (52) de façon à ce que l'ensemble de carcasse (52) soit enroulé axialement autour de chaque élément de renfort circonférentiel (26).

5. Procédé selon la revendication précédente, dans lequel la ou chaque couche de carcasse (34) étant délimitée axialement par deux bords axiaux (34A, 34B) de la couche de carcasse (34) et comprenant les éléments de renfort filaires de carcasse (340) s'étendant axialement d'un bord axial (34A, 34B) à l'autre bord axial (34A, 34B) de la couche de carcasse (34), la direction principale de chaque élément de renfort filaire de carcasse (D3) forme, avec la direction circonférentielle (X) du pneumatique (10):
- un angle ACS, en valeur absolue, strictement inférieur à 80°, dans une portion axialement centrale (34S) de la couche de carcasse (34) s'étendant axialement à l'aplomb radial de la couche de travail (18),
- un angle ACF allant, en valeur absolue, de 80° à 90°, de préférence de 85° à 90° et plus préférentiellement est sensiblement égal à 90°, dans chaque portion axialement latérale (34F) de la couche de carcasse (34) s'étendant axialement entre la portion axialement centrale (34S) et chaque bord axial (34A, 34B) de la couche de carcasse (34), chaque portion axialement latérale (34F) étant enroulée autour de chaque élément de renfort circonférentiel (26).

6. Procédé selon la revendication précédente, dans lequel l'angle ACS va, en valeur absolue, de 50° à 75°.

7. Procédé selon la revendication 5 ou 6, dans lequel chaque portion axialement latérale (34F) de la couche de carcasse (34) comprend :
- une portion axialement latérale intérieure (38) agencée axialement entre la portion axialement centrale (34S) et chaque élément de renfort circonférentiel (26) et dans laquelle la direction principale (D3) de chaque élément de renfort filaire de carcasse (340) forme, avec la direction circonférentielle (X) du pneumatique, un angle ACF1,
- une portion axialement latérale extérieure (40) agencée axialement entre chaque élément de renfort circonférentiel (26) et chaque bord axial (34A, 34B) de la couche de carcasse (34) et dans laquelle la direction principale (D3) de chaque élément de renfort filaire de carcasse (340) forme, avec la direction circonférentielle (X) du pneumatique, un angle ACF2 d'orientation opposée à l'angle ACF1 tel que |ACF1-ACF2-180|≤20°, de préférence |ACF1-ACF2-180|≤10° et plus préférentiellement |ACF1-ACF2-180| est sensiblement nulle.

8. Procédé selon la revendication précédente, dans lequel chaque angle ACF1 et ACF2 va, en valeur absolue, de 80° à 90°, de préférence de 85° à 90° et plus préférentiellement est sensiblement égal à 90°.

9. Procédé selon l'une quelconque des revendications 5 à 8, dans lequel on déforme l'assemblage (58) de forme sensiblement cylindrique de façon à obtenir l'assemblage (58) de forme sensiblement torique de sorte que, à l'issue de l'étape de déformation, la direction principale (K3) de chaque élément de renfort filaire de carcasse (340) forme, avec la direction circonférentielle (x) du support :
- un angle final B3S, en valeur absolue, strictement inférieur à 80°, dans une portion axialement centrale (52S) de l'ensemble de carcasse (52) s'étendant axialement à l'aplomb radial de l'ensemble de travail (50) et destiné à former la portion axialement centrale (34S) de la couche de carcasse (34),
- un angle final B3F allant, en valeur absolue, de 80° à 90°, de préférence de 85° à 90° et plus préférentiellement est sensiblement égal à 90°, dans deux portions axialement latérales (52F) de l'ensemble de carcasse (52) s'étendant chacune axialement entre la portion axialement centrale (52S) et chaque bord axial (52A, 52B) de l'ensemble de carcasse (52) et chacune destiné à former chaque portion axialement latérale (34F) de la couche de carcasse (34).

10. Procédé selon la revendication précédente, dans lequel, l'angle B3S va, en valeur absolue de 50° à 75°.

11. Procédé selon l'une quelconque des revendications précédentes, dans lequel, l'ensemble de travail (50) étant délimité axialement par deux bords axiaux (50A, 50B) de l'ensemble de travail (50) et comprenant les éléments de renfort filaires de travail (180) s'étendant sensiblement parallèlement les uns aux autres axialement d'un bord axial (50A, 50B) à l'autre bord axial (50A, 50B) de l'ensemble de travail (50), chaque élément de renfort filaire de travail (180) s'étend, dans l'ensemble de travail (50), selon une direction principale (K2) de chaque élément de renfort filaire de travail (180) formant, avec la direction circonférentielle (x) du support (60), un angle initial A2 allant, en valeur absolue de 25° à 50°.

12. Procédé selon la revendication précédente, dans lequel on déforme l'assemblage (58) de forme sensiblement cylindrique autour de l'axe principal (A) du support (60) de façon à obtenir l'assemblage (58) de forme sensiblement torique autour de l'axe principal (A) du support (60) de sorte que, à l'issue de l'étape de déformation, la direction principale (K2) de chaque élément de renfort filaire de travail (180) forme, avec la direction circonférentielle (x) du support (60), un angle final B2 allant, en valeur absolue, de 27° à 40°, de préférence de 30° à 37° et plus préférentiellement de 30° à 35°.

13. Pneumatique (10) obtenu par un procédé selon l'une quelconque des revendications précédentes.

14. Pneumatique (10) selon la revendication précédente, comprenant une armature de frettage (17) agencée radialement à l'extérieur de l'armature de travail (16), l'armature de frettage (17) étant délimitée axialement par deux bords axiaux (17A, 17B) de l'armature de frettage (17) et comprenant au moins un élément de renfort filaire de frettage (170) enroulé circonférentiellement hélicoïdalement de façon à s'étendre axialement entre les bords axiaux (17A, 17B) de l'armature de frettage (17) selon une direction principale (D1) formant, avec la direction circonférentielle (X) du pneumatique (10), un angle AF, en valeur absolue, inférieur ou égal à 10°, de préférence inférieur ou égal à 7° et plus préférentiellement inférieur ou égal à 5°.

15. Pneumatique (10) selon la revendication 13 ou 14, dans lequel la direction principale (D2) de chaque élément de renfort filaire de travail (180) et la direction principale (D3) de chaque élément de renfort filaire de carcasse (340) forment, avec la direction circonférentielle (X) du pneumatique (10), dans une portion (PS) du pneumatique (10) comprise axialement entre les bords axiaux (18A, 18B) de la couche de travail (18), des angles (D2, D3) d'orientations opposées.

## Patentansprüche

1. Verfahren zur Herstellung eines Reifens (10), umfassend einen Scheitel (12), zwei Seitenwände (22), zwei Wülste (24), wobei jede Seitenwand (22) jeden Wulst (24) mit dem Scheitel (12) verbindet, wobei der Reifen (10) eine Karkassenverstärkung (32) umfasst, die in jedem Wulst (24) verankert ist und sich in jeder Seitenwand (22) und radial innerhalb des Scheitels (12) erstreckt, wobei die Karkassenverstärkung (32) mindestens eine Karkassenlage (34) umfasst, wobei der Scheitel (12) umfasst:
- einen Laufstreifen (20), der dazu bestimmt ist, beim Rollen des Reifens (10) mit einem Boden in Kontakt zu gelangen,
- eine Scheitelverstärkung (14), die radial zwischen dem Laufstreifen (20) und der Karkassenverstärkung (32) angeordnet ist, wobei die Scheitelverstärkung (14) eine Arbeitsverstärkung (16) umfasst, die eine einzige Arbeitslage (18) umfasst, wobei die Arbeitslage (18) axial durch zwei axiale Ränder (18A, 18B) der Arbeitslage (18) begrenzt wird und fadenförmige Arbeitsfestigkeitsträgerelemente (180) umfasst, die sich axial von einem axialen Rand (18A, 18B) zu dem anderen axialen Rand (18A, 18B) der Arbeitslage (18) im Wesentlichen parallel zueinander entlang einer Hauptrichtung (D2) jedes fadenförmigen Arbeitsfestigkeitsträgerelements (180) erstrecken, wobei sie mit der Umfangsrichtung (X) des Reifens (10) einen Winkel AT bilden,
Verfahren, bei dem:
- man um einen Träger (60), der eine im Wesentlichen zylindrische Form um eine Hauptachse (A) aufweist, eine Karkasseneinheit (52) anordnet, die dazu bestimmt ist, die mindestens eine Karkassenlage (34) zu bilden, wobei die Karkasseneinheit (52) axial durch zwei axiale Ränder (52A, 52B) der Karkasseneinheit (52) begrenzt wird und fadenförmige Karkassenfestigkeitsträgerelemente (340) umfasst, die sich im Wesentlichen parallel zueinander axial von einem axialen Rand (52A, 52B) zu dem anderen axialen Rand (52A, 52B) der Karkasseneinheit (52) erstrecken, wobei sich jedes fadenförmige Karkassenfestigkeitsträgerelement (340) in der Karkasseneinheit (52) entlang einer Hauptrichtung (K3) jedes fadenförmigen Karkassenfestigkeitsträgerelements (340) erstreckt, die mit der Umfangsrichtung (x) des Trägers (60) einen Anfangswinkel A3 bildet, der, als absoluter Wert, im Bereich von 80° bis 90° liegt,
- man radial außerhalb der Karkasseneinheit (52) eine Arbeitseinheit (50) anordnet, die dazu bestimmt ist, die Arbeitslage (18) zu bilden, wobei die Karkasseneinheit (52) und die Arbeitseinheit (50) eine Anordnung (58) von im Wesentlichen zylindrischer Form um die Hauptachse (A) des Trägers (60) bilden,
- man die Anordnung (58) von im Wesentlichen zylindrischer Form um die Hauptachse (A) des Trägers (60) so verformt, dass eine Anordnung (58) von im Wesentlichen torischer Form um die Hauptachse (A) des Trägers (60) erhalten wird,
- man einen Rohling des Reifens, der ausgehend von der Anordnung (58) von im Wesentlichen torischer Form erhalten wird, so vernetzt, dass der Reifen (10) erhalten wird,
**dadurch gekennzeichnet, dass** der Winkel AT, als absoluter Wert, im Bereich von 30° bis 37° liegt.

2. Verfahren nach dem vorhergehenden Anspruch, wobei der Winkel A3, als absoluter Wert, im Bereich von 85° bis 90° liegt und bevorzugt im Wesentlichen 90° beträgt.

3. Verfahren nach einem der vorhergehenden Ansprüche, wobei der Winkel AT, als absoluter Wert, im Bereich von 30° bis 35° liegt.

4. Verfahren nach einem der vorhergehenden Ansprüche, wobei, wenn jeder Wulst (24) ein umfängliches Festigkeitsträgerelement (26) umfasst, nach dem Schritt des Anordnens der Karkasseneinheit (52) und vor dem Schritt des Anordnens der Arbeitseinheit:
- man die beiden umfänglichen Festigkeitsträgerelemente (26) um die Karkasseneinheit (52) anordnet,
- man jeden axialen Rand (52A, 52B) der Karkasseneinheit (52) axial nach innen umlegt, so dass die Karkasseneinheit (52) axial um jedes umfängliche Festigkeitsträgerelement (26) gewickelt ist.

5. Verfahren nach dem vorhergehenden Anspruch, wobei, wenn die oder jede Karkassenlage (34) axial durch zwei axiale Ränder (34A, 34B) der Karkassenlage (34) begrenzt wird und die fadenförmigen Karkassenfestigkeitsträgerelemente (340) umfasst, die sich axial von einem axialen Rand (34A, 34B) zu dem anderen axialen Rand (34A, 34B) der Karkassenlage (34) erstrecken, die Hauptrichtung jedes fadenförmigen Karkassenfestigkeitsträgerelements (D3) mit der Umfangsrichtung (X) des Reifens (10) bildet:
- einen Winkel ACS, der, als absoluter Wert, strikt kleiner als 80° ist, in einem axial zentralen Abschnitt (34S) der Karkassenlage (34), der sich radial direkt unter der Arbeitslage (18) axial erstreckt,
- einen Winkel ACF, der, als absoluter Wert, im Bereich von 80° bis 90°, bevorzugt von 85° bis 90° liegt und noch bevorzugter im Wesentlichen 90° beträgt, in jedem axial seitlichen Abschnitt (34F) der Karkassenlage (34), der sich axial zwischen dem axial zentralen Abschnitt (34S) und jedem axialen Rand (34A, 34B) der Karkassenlage (34) erstreckt, wobei jeder axial seitliche Abschnitt (34F) um jedes umfängliche Festigkeitsträgerelement (26) gewickelt ist.

6. Verfahren nach dem vorhergehenden Anspruch, wobei der Winkel ACS, als absoluter Wert, im Bereich von 50° bis 75° liegt.

7. Verfahren nach Anspruch 5 oder 6, wobei jeder axial seitliche Abschnitt (34F) der Karkassenlage (34) umfasst:
- einen inneren axial seitlichen Abschnitt (38), der axial zwischen dem axial zentralen Abschnitt (34S) und jedem umfänglichen Festigkeitsträgerelement (26) angeordnet ist und in dem die Hauptrichtung (D3) jedes fadenförmigen Karkassenfestigkeitsträgerelements (340) mit der Umfangsrichtung (X) des Reifens einen Winkel ACF1 bildet,
- einen äußeren axial seitlichen Abschnitt (40), der axial zwischen jedem umfänglichen Festigkeitsträgerelement (26) und jedem axialen Rand (34A, 34B) der Karkassenlage (34) angeordnet ist und in dem die Hauptrichtung (D3) jedes fadenförmigen Karkassenfestigkeitsträgerelements (340) mit der Umfangsrichtung (X) des Reifens einen Winkel ACF2 mit entgegengesetzter Ausrichtung zu dem Winkel ACF1 bildet, so dass |ACF1-ACF2-180|≤20°, bevorzugt |ACF1-ACF2-180|≤10° und noch bevorzugter ACF1-ACF2-180| im Wesentlichen null ist.

8. Verfahren nach dem vorhergehenden Anspruch, wobei jeder Winkel ACF1 und ACF2, als absoluter Wert, im Bereich von 80° bis 90°, bevorzugt von 85° bis 90° liegt und noch bevorzugt im Wesentlichen 90° beträgt.

9. Verfahren nach einem der Ansprüche 5 bis 8, wobei man die Anordnung (58) von im Wesentlichen zylindrischer Form so verformt, dass die Anordnung (58) von im Wesentlichen torischer Form erhalten wird, so dass, nach dem Verformungsschritt, die Hauptrichtung (K3) jedes fadenförmigen Karkassenfestigkeitsträgerelements (340) mit der Umfangsrichtung (x) des Trägers bildet:
- einen finalen Winkel B3S, der, als absoluter Wert, strikt kleiner als 80° ist, in einem axial zentralen Abschnitt (52S) der Karkasseneinheit (52), der sich radial direkt unter der Arbeitseinheit (50) axial erstreckt und dazu bestimmt ist, den axial zentralen Abschnitt (34S) der Karkassenlage (34) zu bilden,
- einen finalen Winkel B3F, der, als absoluter Wert, im Bereich von 80° bis 90°, bevorzugt von 85° bis 90° liegt und noch bevorzugter im Wesentlichen 90° beträgt, in zwei axial seitlichen Abschnitten (52F) der Karkasseneinheit (52), die sich jeweils axial zwischen dem axial zentralen Abschnitt (52S) und jedem axialen Rand (52A, 52B) der Karkasseneinheit (52) erstrecken und von denen jeder dazu bestimmt ist, jeden axial seitlichen Abschnitt (34F) der Karkassenlage (34) zu bilden.

10. Verfahren nach dem vorhergehenden Anspruch, wobei der Winkel B3S, als absoluter Wert, im Bereich von 50° bis 75° liegt.

11. Verfahren nach einem der vorhergehenden Ansprüche, wobei, wenn die Arbeitseinheit (50) axial durch zwei axiale Ränder (50A, 50B) der Arbeitseinheit (50) begrenzt wird und die fadenförmigen Arbeitsfestigkeitsträgerelemente (180) umfasst, die sich im Wesentlichen parallel zueinander axial von einem axialen Rand (50A, 50B) zu dem anderen axialen Rand (50A, 50B) der Arbeitseinheit (50) erstrecken, jedes fadenförmige Arbeitsfestigkeitsträgerelement (180) sich in der Arbeitseinheit (50) entlang einer Hauptrichtung (K2) jedes fadenförmigen Arbeitsfestigkeitsträgerelements (180) erstreckt, die mit der Umfangsrichtung (x) des Trägers (60) einen Anfangswinkel A2 bildet, der, als absoluter Wert, im Bereich von 25° bis 50° liegt.

12. Verfahren nach dem vorhergehenden Anspruch, wobei man die Anordnung (58) von im Wesentlichen zylindrischer Form um die Hauptachse (A) des Trägers (60) so verformt, dass die Anordnung (58) von im Wesentlichen torischer Form um die Hauptachse (A) des Trägers (60) erhalten wird, so dass, nach dem Verformungsschritt, die Hauptrichtung (K2) jedes fadenförmigen Arbeitsfestigkeitsträgerelements (180) mit der Umfangsrichtung (x) des Trägers (60) einen finalen Winkel B2 bildet, der, als absoluter Wert, im Bereich von 27° bis 40°, bevorzugt von 30° bis 37° und noch stärker bevorzugt von 30° bis 35° liegt.

13. Reifen (10), der durch ein Verfahren nach einem der vorhergehenden Ansprüche erhalten wird.

14. Reifen (10) nach dem vorhergehenden Anspruch, umfassend eine Umreifungsverstärkung (17), die radial außerhalb der Arbeitsverstärkung (16) angeordnet ist, wobei die Umreifungsverstärkung (17) axial durch zwei axiale Ränder (17A, 17B) der Umreifungsverstärkung (17) begrenzt wird und mindestens ein fadenförmiges Umreifungsfestigkeitsträgerelement (170) umfasst, das umfänglich schraubenförmig gewickelt ist, so dass es sich axial zwischen den axialen Rändern (17A, 17B) der Umreifungsverstärkung (17) entlang einer Hauptrichtung (D1) erstreckt, die mit der Umfangsrichtung (X) des Reifens (10) einen Winkel AF bildet, der, als absoluter Wert, kleiner oder gleich 10°, bevorzugt kleiner oder gleich 7° und noch bevorzugter kleiner oder gleich 5° ist.

15. Reifen (10) nach Anspruch 13 oder 14, wobei die Hauptrichtung (D2) jedes fadenförmigen Arbeitsfestigkeitsträgerelements (180) und die Hauptrichtung (D3) jedes fadenförmigen Karkassenfestigkeitsträgerelements (340) mit der Umfangsrichtung (X) des Reifens (10) in einem Abschnitt (PS) des Reifens (10), der axial zwischen den axialen Rändern (18A, 18B) der Arbeitslage (18) enthalten ist, Winkel (D2, D3) mit entgegengesetzten Ausrichtungen bilden.

## Claims

1. Method for manufacturing a tyre (10) comprising a crown (12), two sidewalls (22) and two beads (24), each sidewall (22) respectively connecting each bead (24) to the crown (12), the tyre (10) comprising a carcass reinforcement (32) that is anchored in each bead (24) and extends in each sidewall (22) and radially on the inside of the crown (12), the carcass reinforcement (32) comprising at least one carcass layer (34), the crown (12) comprising:
- a tread (20) intended to come into contact with the ground when the tyre (10) is running,
- a crown reinforcement (14) arranged radially between the tread (20) and the carcass reinforcement (32), the crown reinforcement (14) comprising a working reinforcement (16) comprising a single working layer (18), the working layer (18) being delimited axially by two axial edges (18A, 18B) of the working layer (18) and comprising working filamentary reinforcing elements (180) that extend axially from one axial edge (18A, 18B) to the other axial edge (18A, 18B) of the working layer (18) substantially parallel to one another along a main direction (D2) of each working filamentary reinforcing element (180) that forms, with the circumferential direction (X) of the tyre (10), an angle AT,
wherein, in this method:
- a carcass assembly (52) intended to form the at least one carcass layer (34) is arranged around a support (60) having a substantially cylindrical shape about a main axis (A), the carcass assembly (52) being delimited axially by two axial edges (52A, 52B) of the carcass assembly (52) and comprising carcass filamentary reinforcing elements (340) that extend substantially parallel to one another axially from one axial edge (52A, 52B) to the other axial edge (52A, 52B) of the carcass assembly (52), each carcass filamentary reinforcing element (340) extending, in the carcass assembly (52), along a main direction (K3) of each carcass filamentary reinforcing element (340) that forms, with the circumferential direction (x) of the support (60), an initial angle A3 that ranges, in terms of absolute value, from 80° to 90°,
- a working assembly (50) intended to form the working layer (18) is arranged radially on the outside of the carcass assembly (52), the carcass assembly (52) and the working assembly (50) forming an assembly (58) with a substantially cylindrical shape about the main axis (A) of the support (60),
- the assembly (58) with a substantially cylindrical shape about the main axis (A) of the support (60) is deformed so as to obtain an assembly (58) with a substantially toric shape about the main axis (A) of the support (60),
- a green form of tyre obtained from the assembly (58) with a substantially toric shape is crosslinked in order to obtain the tyre (10),
**characterized in that** the angle AT ranges, in terms of absolute value, from 30° to 37°.

2. Method according to the preceding claim, wherein the angle A3 ranges, in terms of absolute value, from 85° to 90° and is preferably substantially equal to 90°.

3. Method according to any one of the preceding claims, wherein the angle AT ranges, in terms of absolute value, from 30° to 35°.

4. Method according to any one of the preceding claims, wherein, with each bead (24) comprising a circumferential reinforcing element (26), after the step of arranging the carcass assembly (52) and before the step of arranging the working assembly:
- the two circumferential reinforcing elements (26) are arranged around the carcass assembly (52),
- each axial edge (52A, 52B) of the carcass assembly (52) is turned axially inwards such that the carcass assembly (52) is wound axially around each circumferential reinforcing element (26).

5. Method according to the preceding claim, wherein, with the or each carcass layer (34) being delimited axially by two axial edges (34A, 34B) of the carcass layer (34) and comprising the carcass filamentary reinforcing elements (340) that extend axially from one axial edge (34A, 34B) to the other axial edge (34A, 34B) of the carcass layer (34), the main direction (D3) of each carcass filamentary reinforcing element (340) forms, with the circumferential direction (X) of the tyre (10):
- an angle ACS which, in terms of absolute value, is strictly less than 80°, in an axially central portion (34S) of the carcass layer (34) that extends axially in radial line with the working layer (18),
- an angle ACF which ranges, in terms of absolute value, from 80° to 90°, preferably from 85° to 90° and, more preferably, is substantially equal to 90°, in each axially lateral portion (34F) of the carcass layer (34) that extends axially between the axially central portion (34S) and each axial edge (34A, 34B) of the carcass layer (34), each axially lateral portion (34F) being wound around each circumferential reinforcing element (26).

6. Method according the preceding claim, wherein the angle ACS ranges, in terms of absolute value, from 50° to 75°.

7. Method according to Claim 5 or 6, wherein each axially lateral portion (34F) of the carcass layer (34) comprises:
- an inner axially lateral portion (38) which is arranged axially between the axially central portion (34S) and each circumferential reinforcing element (26) and in which the main direction (D3) of each carcass filamentary reinforcing element (340) forms, with the circumferential direction (X) of the tyre, an angle ACF1,
- an outer axially lateral portion (40) which is arranged axially between each circumferential reinforcing element (26) and each axial edge (34A, 34B) of the carcass layer (34) and in which the main direction (D3) of each carcass filamentary reinforcing element (340) forms, with the circumferential direction (X) of the tyre, an angle ACF2 with an orientation opposite to the angle ACF1 such that |ACF1-ACF2-180|≤20°, preferably |ACF1-ACF2-180|≤10°, and, more preferably, |ACF1-ACF2-180| is substantially zero.

8. Method according to the preceding claim, wherein each angle ACF1 and ACF2 ranges, in terms of absolute value, from 80° to 90°, preferably from 85° to 90° and, more preferably, is substantially equal to 90°.

9. Method according to any one of Claims 5 to 8, wherein the assembly (58) with a substantially cylindrical shape is deformed so as to obtain the assembly (58) with a substantially toric shape such that, following the deformation step, the main direction (K3) of each carcass filamentary reinforcing element (340) forms, with the circumferential direction (x) of the support:
- a final angle B3S which, in terms of absolute value, is strictly less than 80°, in an axially central portion (52S) of the carcass assembly (52) that extends axially in radial line with the working assembly (50) and is intended to form the axially central portion (34S) of the carcass layer (34),
- a final angle B3F which ranges, in terms of absolute value, from 80° to 90°, preferably from 85° to 90° and, more preferably, is substantially equal to 90°, in two axially lateral portions (52F) of the carcass assembly (52) that each extend axially between the axially central portion (52S) and each axial edge (52A, 52B) of the carcass assembly (52) and are each intended to form each axially lateral portion (34F) of the carcass layer (34).

10. Method according to the preceding claim, wherein the angle B3S ranges, in terms of absolute value, from 50° to 75°.

11. Method according to any one of the preceding claims, wherein, with the working assembly (50) being delimited axially by two axial edges (50A, 50B) of the working assembly (50) and comprising the working filamentary reinforcing elements (180) that extend substantially parallel to one another axially from one axial edge (50A, 50B) to the other axial edge (50A, 50B) of the working assembly (50), each working filamentary reinforcing element (180) extends, in the working assembly (50), along a main direction (K2) of each working filamentary reinforcing element (180) that forms, with the circumferential direction (x) of the support (60), an initial angle A2 that ranges, in terms of absolute value, from 25° to 50°.

12. Method according to the preceding claim, wherein the assembly (58) with a substantially cylindrical shape about the main axis (A) of the support (60) is deformed so as to obtain the assembly (58) with a substantially toric shape about the main axis (A) of the support (60) such that, following the deformation step, the main direction (K2) of each working filamentary reinforcing element (180) forms, with the circumferential direction (x) of the support (60), a final angle B2 that ranges, in terms of absolute value, from 27° to 40°, preferably from 30° to 37° and more preferably from 30° to 35°.

13. Tyre (10) obtained by a method according to any one of the preceding claims.

14. Tyre (10) according to the preceding claim, comprising a hoop reinforcement (17) arranged radially on the outside of the working reinforcement (16), the hoop reinforcement (17) being delimited axially by two axial edges (17A, 17B) of the hoop reinforcement (17) and comprising at least one hooping filamentary reinforcing element (170) wound circumferentially in a helix so as to extend axially between the axial edges (17A, 17B) of the hoop reinforcement (17) along a main direction (D1) that forms, with the circumferential direction (X) of the tyre (10), an angle AF which, in terms of absolute value, is less than or equal to 10°, preferably less than or equal to 7° and more preferably less than or equal to 5°.

15. Tyre (10) according to Claim 13 or 14, wherein the main direction (D2) of each working filamentary reinforcing element (180) and the main direction (D3) of each carcass filamentary reinforcing element (340) form, with the circumferential direction (X) of the tyre (10), angles (D2, D3) with opposite orientations in a portion (PS) of the tyre (10) located axially between the axial edges (18A, 18B) of the working layer (18).
